(19) Europäisches Patentamt
European Patent Office
Office européen des brevets

(11) Veröffentlichungsnummer : **0 111 236 B1**

# (12) EUROPÄISCHE PATENTSCHRIFT

(45) Veröffentlichungstag der Patentschrift : **30.07.86**

(51) Int. Cl.[4] : **C 09 B 29/42**// C09B29/01, D06P1/18

(21) Anmeldenummer : **83111892.2**

(22) Anmeldetag : **28.11.83**

## (54) Pyridonfarbstoffe.

(30) Priorität : **04.12.82 DE 3244960**

(43) Veröffentlichungstag der Anmeldung : **20.06.84 Patentblatt 84/25**

(45) Bekanntmachung des Hinweises auf die Patenterteilung : **30.07.86 Patentblatt 86/31**

(84) Benannte Vertragsstaaten : **CH DE FR GB IT LI**

(56) Entgegenhaltungen :
**FR-A- 2 267 345**
**FR-A- 2 378 068**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Lamm, Gunther, Dr.**
**Heinrich-Heine-Strasse 7**
**D-6733 Hassloch (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 111 236 B1

**Beschreibung**

Die Erfindung betrifft Verbindungen der allgemeinen Formel I

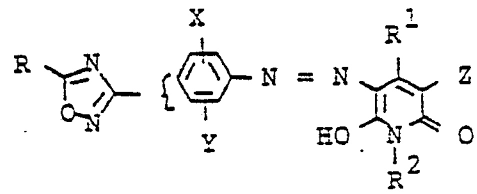

(I)

in der

R Wasserstoff oder ein aliphatischer, Alkenyl-, cycloaliphatischer, araliphatischer oder aromatischer oder heteroaromatischer Rest,

$R^1$ Wasserstoff, Amino, Hydroxy oder $C_1$- bis $C_3$-Alkyl,

$R^2$ Wasserstoff, gegebenenfalls substituiertes Alkyl, Allyl, Aralkyl oder Aryl oder Alkyl- oder Arylamino,

X Wasserstoff, Chlor, Brom, Nitro, Methyl, Phenoxy, Tolyloxy, Dimethylphenyloxy, Chlorphenoxy oder $C_1$- bis $C_8$-Alkoxy,

Y Wasserstoff, Chlor oder Brom und

Z Wasserstoff, Acetyl, Carbamoyl oder Cyan sind.

Reste R sind beispielsweise $C_1$- bis $C_{17}$-Alkyl, das noch durch Sauerstoff unterbrochen und z. B. durch Phenyl, Methylphenyl, Carboxyl, Carbonester oder gegebenenfalls substituiertes Phenoxy substituiert sein kann, Hydroxycarbonylvinyl, Alkoxycarbonylvinyl, Cycloalkyl mit 5 bis 7 C-Atomen, gegebenenfalls durch Chlor, Brom, $C_1$- bis $C_4$-Alkyl oder $C_1$- bis $C_4$-Alkoxy substituiertes Phenyl sowie Pyridyl oder Thienyl.

Einzelne Reste R sind z. B. : Methyl, Ethyl, n- oder i-Propyl, n- oder i-Butyl, n- oder i-Pentyl, n-Hexyl, n-Heptyl, 1-Ethylpentyl, Decyl, Undecyl, Dodecyl, $C_{15}H_{31}$, $C_{17}H_{35}$, $H_5C_2O_2CC_2H_4$—, $H_9C_4O_2CC_2H_4$,

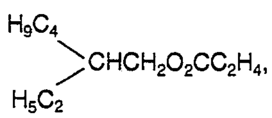 $H_3COC_2H_4O_2CC_2H_4$, $H_5C_2OC_2H_4O_2CC_2H_4$, $H_9C_4OC_2H_4O_2CC_2H_4$,

2-Ethylhexyloxymethyl oder -ethyl, Hexyloxyethyl, Isopropoxyethyl, Phenyl, Chlorphenyl, Cyclohexyl und insbesondere Phenoxymethyl oder -ethyl oder Benzyloxymethyl.

Alkylreste $R^2$ haben insbesondere bis zu 18 C-Atome und können geradlinig oder verzweigt sein. Weiterhin kommen Phenyl-$C_1$- bis -$C_4$-alkyl sowie gegebenenfalls substituiertes Phenyl oder Phenylamino in Betracht.

Einzelne Reste $R^2$ sind beispielsweise : Methyl, Ethyl, n- oder i-Propyl, n- oder i-Butyl, n-Pentyl, n-Hexyl, n- oder i-Heptyl, n- oder i-Octyl, n-Nonyl, n-Decyl, n-Undecyl, Phenyl, m-Tolyl, p-Tolyl, Phenylamino, 2-Ethylhexyloxypropyl, Hexyloxypropyl sowie Hydroxyethoxyethyl oder Hydroxybutoxypropyl.

Alkoxyreste X sind z. B. : Octoxy, β-Ethylhexoxy, Hexoxy, Phenoxy, Amyloxy, Butoxy, i-Butoxy, Propoxy, i-Propoxy, Ethoxy und vorzugsweise Methoxy.

Zur Herstellung der Verbindungen der Formel I kann man eine Diazoniumverbindung von Aminen der Formel

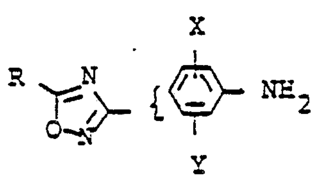

mit einer Kupplungskomponente der Formel

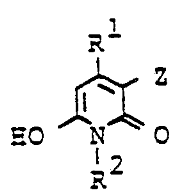

umsetzen. Einzelheiten der Herstellung können den Beispielen entnommen werden, in denen sich Angaben über Teile und Prozente, sofern nicht anders vermerkt, auf das Gewicht beziehen.

Von besonderer Bedeutung sind Verbindungen der Formel Ia

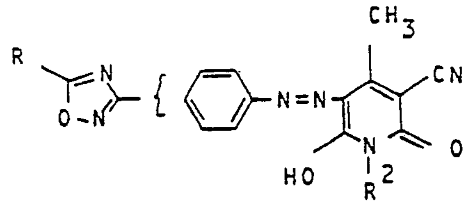

in der

R $C_3$- bis $C_{17}$-Alkyl, durch $C_4$- bis $C_8$-Alkoxy, Phenoxy oder Benzyloxy substituiertes $C_1$- oder $C_2$-Alkyl oder durch gegebenenfalls durch Sauerstoff unterbrochenes $C_1$- bis $C_8$-Alkoxycarbonyl substituiertes $C_1$- bis $C_4$-Alkyl ist und

$R^2$ Wasserstoff, $C_1$- bis $C_6$-Alkyl oder Allyl sind, wobei $R^2$ von Wasserstoff verschieden ist, wenn R einen Phenylring enthält.

Vorzugsweise beträgt die Summe der C-Atome von R und $R^2$ zusammen 4 bis 13, insbesondere 5 bis 11.

Wenn $R^2$ Wasserstoff ist, soll R vorzugsweise keinen Phenylring enthalten.

Die Verbindungen der Formel I sind gelbe Dispersionsfarbstoffe, die sich durch sehr gute Echtheiten und hervorragende Farbstärke auszeichnen. Weiterhin ist meistens das färberische Verhalten einwandfrei.

Farbstoffe, die Hydroxylgruppen in R oder $R^2$ enthalten, sind in der Regel für Leder und Polyamid geeignet.

Weiterhin eignen sich die Farbstoffe teilweise zum Drucken von Baumwolle und Baumwolle/Polyester-Mischgeweben, beispielsweise nach der in der DE-C-18 11 796 beschriebenen Methode.

Aus der FR-A-2 267 354 sind Farbstoffe bekannt, die den Oxdiazolylrest in O-Position zur Azogruppe tragen ; die nächstvergleichbaren Farbstoffe haben dabei Pigmentcharakter. Es war daher überraschend, daß die erfindungsgemäßen Farbstoffe sehr gut zum Färben von Polyestern geeignet sind.

Die angegebenen $\lambda_{max}$-Werte der Farbstoffe wurden in einer Lösung aus 9 Teilen Dimethylformamid und 1 Teil Eisessig ermittelt.

Beispiel 1

98 Teile der Verbindung der Formel

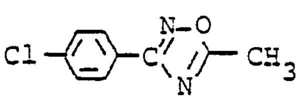

werden bei 0 bis 20 °C in 250 Raumteilen 96 bis 98 %iger Schwefelsäure gelöst. Dazu gibt man unter Kühlung bei 10 bis 40 °C 25 Raumteile einer 98 %igen Salpetersäure. Das Gemisch rührt über Nacht bei Raumtemperatur nach und wird dann auf ca. 900 Teile Eis und 300 Teile Wasser von 0 °C ausgerührt. Die erhaltene Fällung des Produktes der Formel

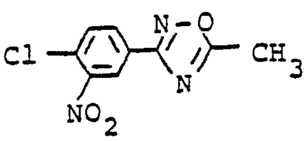

wird abgesaugt und mit Wasser neutral gewaschen. Nach dem Trocknen werden 116 Teile eines farblosen Pulvers mit einem Schmelzpunkt von 110 °C erhalten.

210 Teile dieses Produktes werden in 500 Raumteilen Alkohol und 900 Raumteilen Ammoniakwasser (25 %ig) im Autoklaven 10 Stunden bei 150 °C gerührt.

Anschließend destilliert man das Lösungsmittel soweit möglich ab und fällt den Rückstand mit Wasser. Nach Absaugen und Trocknen erhält man 193 Teile der Diazokomponente der Formel

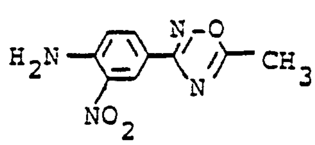

44 Teile dieser Diazokomponente werden mit 210 Raumteilen Eisessig verrührt, dann tropft man bei 25 bis 55 °C ca. 60 teile Brom hinzu und gibt gleichzeitig noch ca. 80 Teile Natriumacetat zu.

Nach dem Bromieren wird die Mischung in Wasser gegeben und mit Natronlauge auf pH 4 bis 6 eingestellt. Nach dem Absaugen und Waschen mit Wasser und Trocknen erhält man 56 Teile eines gelben Pulvers der Formel

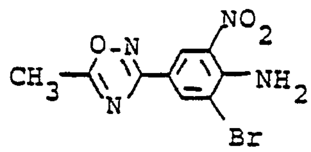

das bei 152 °C schmilzt.

13,5 Teile des bromfreien Produktes werden in 80 Raumteilen Eisessig, 20 Raumteilen Propionsäure und 3 Teilen Schwefelsäure suspendiert. Bei 0 bis 7 °C tropft man innerhalb von 20 Minuten 22 Teile einer 44 %igen Nitrosylschwefelsäure-Lösung hinzu und rührt die Mischung dann 2 bis 3 Stunden bei 0 bis 5 °C nach. Die klare Lösung wird dann auf ca. 180 Teile Eis und 150 Teile Wasser von 0 °C gegeben und überschüssige salpetrige Säure wird wie üblich zerstört. Danach hebt man den pH-Wert der Lösung durch Zugabe von etwas Natriumacetat auf 1,0 bis 1,5 an, wobei die Temperatur durch Eiszugabe bei 0 °C gehalten wird.

In die so erhaltene Diazoniumsalz-Lösung läßt man unter gutem Rühren eine Lösung von 14,5 Teilen 1-(n)-Hexyl-2-hydroxy-3-cyan-4-methyl-pyridon-6 in 200 Teilen Wasser und 10 Teilen 50 %iger Natronlauge einlaufen. Die Temperatur wird dabei durch Zugabe von Eiswasser bei 0 bis 10 °C gehalten. Man erhält eine gelbe Fällung des Farbstoffes der Formel

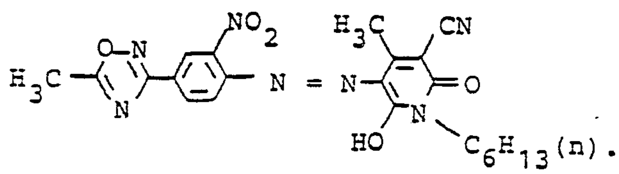

Nach dem üblichen Absaugen, Waschen mit Wasser und Trocknen erhält man 24,4 Teile eines gelben Pulvers, das sich in Dimethylformamid mit gelber Farbe löst. Der Farbstoff färbt Polyestergewebe in farbstarken hochlichtechten Tönen und hat sehr gute färberische Eigenschaften. Eine Lösung des Farbstoffes in einem Gemisch aus Acetonitril/Eisessig = 9/1 hat eine Absorptionsmaximum bei 442 nm (Konzentration ca. 0,01 Teile/1 000 Raumteile).

Analog zu der in Beispiel 1 beschriebenen Arbeitsweise können z. B. die in Tabelle A aufgeführten Zwischenprodukte der allgemeinen Formel II hergestellt werden.

Tabelle A

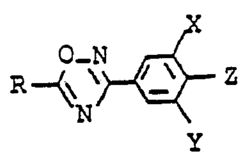

(II)

| Nr. | R | X | Y | Z | λ max. (nm in $CH_3OH$) | Schmelzpunkt °C |
|---|---|---|---|---|---|---|
| 1 | $CH_3$ | H | Cl | Cl | | 108 |
| 2 | $CH_3$ | $NO_2$ | Cl | Cl | | 93 |
| 3 | $CH_3$ | $NO_2$ | Br | $NH_2$ | | 150–153 |
| 4 | $CH_3$ | $NO_2$ | Cl | $NH_2$ | | 95– 97 |
| 5 | $C_2H_5$ | $NO_2$ | H | $NH_2$ | | 123–125 |
| 6 | $C_2H_5$ | $NO_2$ | Cl | $NH_2$ | 402 | |
| 7 | $C_2H_5$ | $NO_2$ | Br | $NH_2$ | | 127–129 |
| 8 | $C_2H_5$ | H | H | Cl | | 16– 20 |
| 9 | $C_2H_5$ | $NO_2$ | H | Cl | | 45– 49 |
| 10 | $C_3H_7$ | H | H | Cl | | 57– 58 |

Tabelle A (Fortsetzung)

| Nr. | R | X | Y | Z | λ max. (nm in $CH_3OH$) | Schmelzpunkt °C |
|---|---|---|---|---|---|---|
| 11 | $C_3H_7$ | $NO_2$ | H | Cl | | 36- 40 |
| 12 | $C_3H_7$ | $NO_2$ | H | $NH_2$ | | 128-131 |
| 13 | $C_3H_7$ | $NO_2$ | Cl | $NH_2$ | 403 | |
| 14 | $C_3H_7$ | $NO_2$ | Br | $NH_2$ | | 85- 87 |
| 15 | $(CH_3)_2CH-$ | H | H | Cl | | < 25 |
| 16 | $(CH_3)_2CH-$ | $NO_2$ | H | Cl | | 30- 33 |
| 17 | $(CH_3)_2CH-$ | $NO_2$ | Cl | $NH_2$ | 403 | |
| 18 | $(CH_3)_2CH-$ | $NO_2$ | Br | $NH_2$ | 403 | |
| 19 | $CH_3CH_2CH(CH_3)-$ | H | H | Cl | | 10- 20 |
| 20 | $CH_3CH_2CH(CH_3)-$ | $NO_2$ | H | Cl | 304 | 20- 26 |
| 21 | $CH_3CH_2CH(CH_3)-$ | $NO_2$ | H | $NH_2$ | | 60- 66 |
| 22 | $CH_3CH_2CH(CH_3)-$ | $NO_2$ | Cl | $NH_2$ | 403,5 | |
| 23 | $CH_3CH_2CH(CH_3)-$ | $NO_2$ | Br | $NH_2$ | 403,5 | |
| 24 | $C_5H_{11}(n)$ | H | H | Cl | 246 | |
| 25 | $C_5H_{11}(n)$ | $NO_2$ | H | Cl | 306 | |
| 26 | $C_5H_{11}(n)$ | $NO_2$ | H | $NH_2$ | 405 | |
| 27 | $C_5H_{11}(n)$ | $NO_2$ | Cl | $NH_2$ | 403 | |
| 28 | $C_5H_{11}(n)$ | $NO_2$ | Br | $NH_2$ | 403 | |
| 29 | $(CH_3)_3C-$ | H | H | Cl | 246,5 | - 0- 5 |
| 30 | $(CH_3)_3C-$ | $NO_2$ | H | Cl | 303 | 103 |
| 31 | $(CH_3)_3C-$ | $NO_2$ | H | $NH_2$ | 406,5 | 133-135 |
| 32 | $(CH_3)_3C-$ | $NO_2$ | Cl | $NH_2$ | | 134-136 |
| 33 | $(CH_3)_3C-$ | $NO_2$ | Br | $NH_2$ | 402,5 | 135-137 |
| 34 | $C_6H_{13}(n)$ | H | H | Cl | 246 | |
| 35 | $C_6H_{13}(n)$ | $NO_2$ | H | Cl | 307 | |
| 36 | $C_6H_{13}(n)$ | $NO_2$ | H | $NH_2$ | 407 | |
| 37 | $C_6H_{13}(n)$ | $NO_2$ | Cl | $NH_2$ | 404,5 | |
| 38 | $C_6H_{13}(n)$ | $NO_2$ | Br | $NH_2$ | 404,5 | |
| 39 | $CH_3OCH_2CH_2$ | $NO_2$ | H | $NH_2$ | | 137-141 |
| 40 | $CH_3OCH_2CH_2$ | $NO_2$ | Br | $NH_2$ | 401,5 | |
| 41 | $C_7H_{15}(n)$ | H | H | Cl | 247 | |
| 42 | $C_7H_{15}(n)$ | $NO_2$ | H | Cl | 305 | |
| 43 | $C_7H_{15}(n)$ | $NO_2$ | H | $NH_2$ | 407 | |
| 44 | $C_7H_{15}(n)$ | $NO_2$ | Cl | $NH_2$ | 406 | |
| 45 | $C_7H_{15}(n)$ | $NO_2$ | Br | $NH_2$ | 406 | |

Tabelle A (Fortsetzung)

| Nr. | R | X | Y | Z | λ max. (nm in $CH_3OH$) | Schmelzpunkt °C |
|---|---|---|---|---|---|---|
| 46 | $C_4H_9(n)-CH-$<br>$C_2H_5$ | H | H | Cl | | $<10$ |
| 47 | $C_4H_9(n)-CH-$<br>$C_2H_5$ | $NO_2$ | H | Cl | 304 | $\leq 16$ |
| 48 | $C_4H_9(n)-CH-$<br>$C_2H_5$ | $NO_2$ | H | $NH_2$ | 405,5 | |
| 49 | $C_4H_9(n)-CH-$<br>$C_2H_5$ | $NO_2$ | Cl | $NH_2$ | 404 | |
| 50 | $C_4H_9(n)-CH-$<br>$C_2H_5$ | $NO_2$ | Br | $NH_2$ | 405 | |
| 51 | $(CH_3)_3C(CH_2)_5-$ | H | H | Cl | 245 | |
| 52 | $(CH_3)_3C(CH_2)_5-$ | $NO_2$ | H | Cl | 307 | |
| 53 | $(CH_3)_3C(CH_2)_5-$ | $NO_2$ | H | $NH_2$ | 405 | |
| 54 | $(CH_3)_3C(CH_2)_5-$ | $NO_2$ | Cl | $NH_2$ | 406 | |
| 55 | $(CH_3)_3C(CH_2)_5-$ | $NO_2$ | Br | $NH_2$ | 406 | |
| 56 | $CH_3(CH_2)_{10}-$ | H | H | Cl | 246 | |
| 57 | $CH_3(CH_2)_{10}-$ | $NO_2$ | H | Cl | 306 | |
| 58 | $CH_3(CH_2)_{10}-$ | $NO_2$ | H | $NH_2$ | 407 | |
| 59 | $CH_3(CH_2)_{10}-$ | $NO_2$ | Cl | $NH_2$ | 406 | |
| 60 | $CH_3(CH_2)_{10}-$ | $NO_2$ | Br | $NH_2$ | 406 | |
| 61 | $CH_3(CH_2)_{14}-$ | H | H | Cl | 247 | |
| 62 | $CH_3(CH_2)_{14}-$ | $NO_2$ | H | Cl | 306 | |
| 63 | $CH_3(CH_2)_{14}-$ | $NO_2$ | H | $NH_2$ | 407 | |
| 64 | $CH_3(CH_2)_{14}-$ | $NO_2$ | Cl | $NH_2$ | 406 | |
| 65 | $CH_3(CH_2)_{14}-$ | $NO_2$ | Br | $NH_2$ | 406 | |
| 66 | $CH_3(CH_2)_{16}-$ | H | H | Cl | 247 | |
| 67 | $CH_3(CH_2)_{16}-$ | $NO_2$ | H | Cl | 307 | |
| 68 | $CH_3(CH_2)_{16}-$ | $NO_2$ | H | $NH_2$ | 407 | |
| 69 | $CH_3(CH_2)_{16}-$ | $NO_2$ | Cl | $NH_2$ | 406 | |
| 70 | $CH_3(CH_2)_{16}-$ | $NO_2$ | Br | $NH_2$ | 406 | |
| 71 | $CH_3OCH_2-$ | H | H | Cl | | 66- 70 |
| 72 | $CH_3OCH_2-$ | $NO_2$ | H | Cl | 303 | |
| 73 | $CH_3OCH_2-$ | $NO_2$ | H | $NH_2$ | 405 | |
| 74 | $CH_3OCH_2-$ | $NO_2$ | Cl | $NH_2$ | 401 | |
| 75 | $CH_3OCH_2-$ | $NO_2$ | Br | H | 401 | |
| 76 | $C_2H_5OCH_2-$ | H | H | Cl | | 64- 67 |
| 77 | $C_2H_5OCH_2-$ | $NO_2$ | H | Cl | 303 | |
| 78 | $C_2H_5OCH_2-$ | $NO_2$ | H | $NH_2$ | 406 | |
| 79 | $C_2H_5OCH_2-$ | $NO_2$ | Cl | $NH_2$ | 401 | |
| 80 | $C_2H_5OCH_2-$ | $NO_2$ | Br | $NH_2$ | 401 | |

Tabelle A (Fortsetzung)

| Nr. | R | X | Y | Z | λ max. (nm in $CH_3OH$) | Schmelzpunkt °C |
|---|---|---|---|---|---|---|
| 81 | $C_3H_7-OCH_2-$ | H | H | Cl | | 33- 38 |
| 82 | $C_6H_5-$ | H | H | Cl | | 115 |
| 83 | $C_6H_5-$ | $NO_2$ | H | Cl | 245,5 | |

Beispiel 2

240 Teile 3-Acetaminobenzonitril werden in einem Gemisch aus 450 Raumteilen Wasser, 87 Teilen Soda, 129 Teilen Hydroxylaminsulfat und 450 Raumteilen Isobutanol sowie 2 Teilen Schwermetallkomplexbildner (wie z. B. Ethylendiamintetraessigsäure) 6 Stunden unter Siedekühlung gerührt. Dann trennt man die untere, wäßrige Phase nach Erkalten ab und setzt dann 450 Raumteile destilliertes Wasser zu. Danach gibt man unter sehr gutem Rühren 270 Teile 2-Ethylhexansäurechlorid und Soda so hinzu, daß die Mischung bei pH 4 bis 7 gehalten wird und rührt dann noch 30 Minuten nach. Der Ansatz wird dann mit Wasser verdünnt, die erhaltene Fällung abgesaugt, mit Wasser gewaschen und getrocknet. Man erhält 420 Teile der Verbindung der Formel

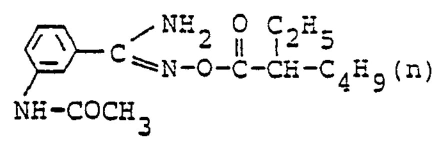

mit einem Schmelzpunkt von 148 °C.

Erhitzt man das erhaltene Produkt auf 150 bis 160 °C und rührt die Schmelze 1 Stunde bei dieser Temperatur, so erhält man unter Wasserabspaltung die Verbindung der Formel

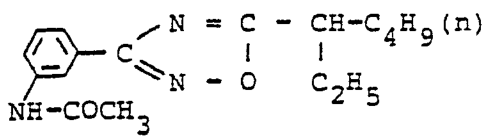

als zähflüssiges Öl, das nach längerem Stehen kristallisiert und dann bei 88 bis 90 °C schmilzt. Ausbeute : 380 Teile.

75 Teile dieses Öls werden in 250 Raumteilen Methanol mit 50 Teilen konzentrierter Schwefelsäure 2 bis 2 1/2 Stunden unter Siedekühlung gerührt. Dann destilliert man Methanol teilweise ab, fällt auf Eiswasser und stumpft auf pH 5 bis 7 ab. Die ölige Phase wird mit Cyclohexan, Essigester etc. extrahiert und das Produkt der Formel

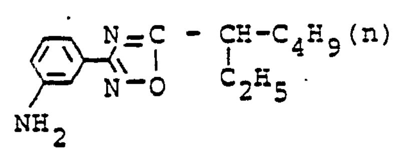

wie üblich isoliert.

Man erhält 64 Teile eines sehr schwach gelblichen Öls, dessen UV-Spektrum in Methanol ein Maximum bei 318 nm zeigt.

Analog zu der in Beispiel 1 und 2 beschriebenen Arbeitsweise kann man z. B. die in Tabelle B aufgeführten Zwischenprodukte der Formel III erhalten.

(Siehe Tabelle B Seite 8 ff.)

Tabelle B

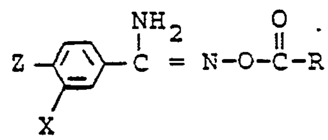 (III)

| Nr. | R | X | Z | λ max (nm) oder Schmelzpunkt (°C) |
|---|---|---|---|---|
| 1 | $CH_3$ | H | $NHCOCH_3$ | 170-173 |
| 2 | $CH_3$ | $NHCOCH_3$ | H | 90- 92 |
| 3 | $CH_3$ | Cl | Cl | 108-111 |
| 4 | $C_2H_5$ | H | $NH-COC_2H_5$ | 148-150 |
| 5 | $C_2H_5$ | $NH-COCH_3$ | H | 131 |
| 6 | $C_3H_7$ | $NH-COCH_3$ | H | 295,5 nm |
| 7 | $C_3H_7$ | H | $NHCOCH_3$ | 136 |
| 8 | $HO_2CC_2H_4-$ | $NH-COCH_3$ | | 154 |
| 9 | $C_4H_9(n)$ | $NH-COCH_3$ | $NH-COCH_3$ | 276,5 nm |
| 10 | $C_4H_9(t)$ | $NH-COCH_3$ | $NH-COCH_3$ | 170-172 |
| 11 | $CH_2OC_6H_5$ | $NH-COCH_3$ | H | 108-110 |
| 12 | $C_4H_9(n)$ | $NH-COCH_3$ | H | 156-160 |
| 13 | $C_6H_{13}(n)$ | H | NHCHO | 153-157 |
| 14 | $C_6H_{13}(n)$ | H | $NH-COCH_3$ | 272 nm |
| 15 | $C_4H_9(n)CH-$<br>$C_2H_5$ | H | $NH-COCH_3$ | 158-163 |
| 16 | $C_7H_{15}(n)$ | $NH-COCH_3$ | H | 144-145 |
| 17 | $C_8H_{17}(n)$ | $NH-COCH_3$ | H | 141-144 |
| 18 | $C_8H_{17}(n)$ | H | $NH-COCH_3$ | 274 nm |
| 19 | $(CH_3)_3C(CH_2)_5-$ | $NH-COCH_3$ | H | 135-140 |
| 20 | $C_{11}H_{23}(n)-$ | $NH-COCH_3$ | H | 237-241 |
| 21 | $C_{11}H_{23}(n)-$ | H | $NH-COCH_3$ | 273 nm |
| 22 | $CH_3(CH_2)_{12}-$ | H | $NHCOCH_3$ | 272,5 nm |
| 23 | $CH_3(CH_2)_{12}-$ | $NHCOCH_3$ | H | 295,5 nm |
| 24 | $CH_3(CH_2)_{14}-$ | $NHCOCH_3$ | H | 296 nm |
| 25 | $CH_3(CH_2)_{14}-$ | H | $NHCOCH_3$ | 136-139 |
| 26 | $CH_3(CH_2)_{16}-$ | H | $NHCOCH_3$ | 127 |
| 27 | $CH_3OCH_2-$ | H | $NHCOCH_3$ | 129-130 |
| 28 | $CH_3OCH_2-$ | $NH-COCH_3$ | H | 294 nm |
| 29 | $C_2H_5OCH_2-$ | $NH-COCH_3$ | H | 156-160 |
| 30 | $C_2H_5OCH_2-$ | H | $NH-COCH_3$ | 276 nm |
| 31 | $(CH_3)_2CH-$ | H | $NH-COCH_3$ | 271 nm |
| 32 | $(CH_3)_2CH-$ | $NHCOCH_3$ | H | 295 nm |
| 33 | $C_6H_5OCH_2CH_2-$ | H | $NH-COCH_3$ | 150 |
| 34 | $C_6H_5-$ | H | $NH-COCH_3$ | 183-185 |
| 35 | $ClCH_2CH_2-$ | H | $NH-COCH_3$ | 163 (Zers.) |
| 36 | $CH_3-$ | Cl | Cl | 111 |

Tabelle B (Fortsetzung)

| Nr. | R | X | Z | λ max (nm) oder Schmelz-punkt (°C) |
|---|---|---|---|---|
| 37 | 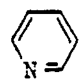 | H | NH-COCH$_3$ | 120 |
| 38 | $CH_2$=CH- | H | NH-COCH$_3$ | 160-162 (Zers.) |
| 39 | ClCH$_2$- | H | NH-COCH$_3$ | 185-188 (Zers.) |
| 40 | 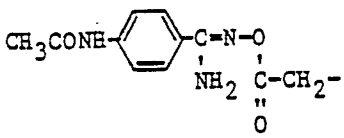 | H | NH-COCH$_3$ | 220-230 |
| 41 | $HO_2CCH_2CH_2$- | H | NH-COCH$_3$ | 270 nm (154) |
| 42 | $HO_2$CCH=CH- | H | NH-COCH$_3$ | 278 nm |
| 43 | $ClCH_2CH_2CH_2$- | H | NH-COCH$_3$ | 273 nm |
| 44 | $C_6H_5OCH_2$- | H | NH-COCH$_3$ | 155 |

Beispiel 3

144 Teile 4-Acetylamino-benzamidoxim werden in 200 Raumteilen N-Methylpyrrolidon und 200 Raumteilen Aceton gelöst. Dazu gibt man 90 Raumteile Buttersäurechlorid und gleichzeitig 10 %ige Natronlauge so zu, daß der pH-Wert des Reaktionsgemisches bei 4,5 bis 7,0 gehalten wird. Man rührt 1 Stunde bei 25 bis 45 °C nach, fällt durch Verdünnen mit Wasser, saugt ab und wäscht mit Wasser salzfrei. Nach dem Trocknen erhält man 180 Teile des Produktes der Formel

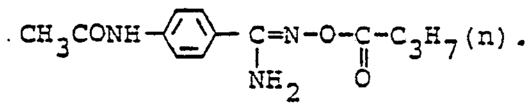

Durch Erhitzen des farblosen Pulvers auf 170 °C erhält man in der Schmelze durch Wasserabspaltung das Produkt der Formel

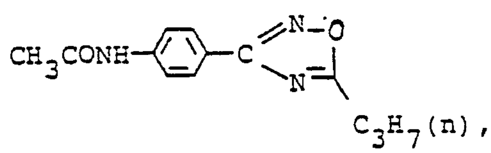

das nach dem Erkalten erstarrt und dann bei 171 °C schmilzt.

Diese Verbindung wird durch Brom nach üblichem Verfahren (z. B. in Eissessig oder Schwefelsäure bei ≤ 40 °C) zu 1-Acetylamino-2-brom-4-(5-n-propyl-oxdiazol-1,2,4-3-yl)-benzol der Formel

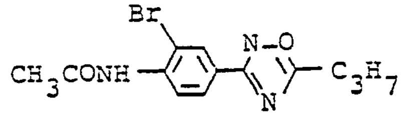

bromiert (UV-Spektrum : $\lambda_{max.}$ : 268,5 nm in Methanol).

41 Teile 1-Acetylamino-4-(5-n-propyl-oxdiazol-1,2,4-3-yl)-benzol werden in 200 Raumteilen Methanol mit 30 Teilen konzentrierter Schwefelsäure bei Siedekühlung gerührt. Nach 1 Stunde destilliert man einen Teil des Methanols nach Neutralisieren des Gemisches ab und verdünnt das Reaktionsgemisch mit Wasser. Die erhaltene Fällung wird abgesaugt, mit Wasser gewaschen und getrocknet. Man erhält 33 Teile der Diazokomponente der Formel

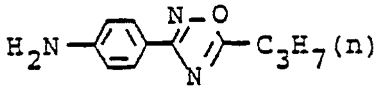

als farbloses Pulver, das bei 88 bis 90 °C schmilzt.

41 Teile 4-(5-n-Propyl-oxdiazol-1,2,4-3-yl)-anilin werden in 200 Raumteilen Eisessig und 45 Teilen wasserfreiem Natriumacetat verrührt. Dann setzt man bei 20 bis 50 °C 80 Teile Brom hinzu, rührt 2 Stunden nach und fällt das entstandene, farblose Produkt der Formel

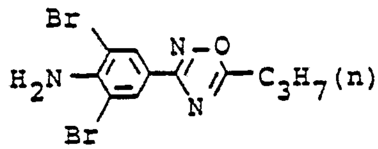

mit Wasser ($\lambda_{max.}$ : 284,5 nm).

Nach Absaugen, Waschen mit Wasser und Trocknen erhält man 69 Teile eines farblosen Pulvers. Führt man die Bromierung in 85 bis 98 %iger Schwefelsäure durch, so benötigt man weniger Brom.

Analog zu der in den Beispielen beschriebenen Verfahrensweise kann man die in Tabelle C genannten Verbindungen der allgemeinen Formel IV herstellen.

Tabelle C

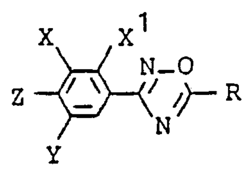

(IV)

| Nr. | R | $X^1$ | X | Y | Z | $\lambda$ max. (nm) oder Schmelzpunkt (°C) |
|---|---|---|---|---|---|---|
| 1 | $CH_3$ | H | Cl | H | NH-$COCH_3$ | 134-136 (269,0 nm) |
| 2 | $CH_3$ | H | Cl | H | $NH_2$ | 283 nm |
| 3 | $CH_3$ | H | H | $NH_2$ | H | 97- 98 |
| 4 | $CH_3$ | H | Cl | Cl | $NH_2$ | 110 (282,5 nm) |
| 5 | $CH_3$ | H | Br | H | NH-$COCH_3$ | 152-155 |
| 6 | $CH_3$ | H | Br | H | $NH_2$ | 148-150 (284,0 nm) |
| 7 | $CH_3$ | H | Br | Br | $NH_2$ | 160-161 (283 nm) |
| 8 | $CH_3$ | Br | H | $NH_2$ | Br | 289 nm |
| 9 | $CH_3$ | $NO_2$ | H | $NH_2$ | H | 130-135 |
| 10 | $CH_3$ | H | H | $NH_2$ | $NO_2$ | 98-103 |
| 11 | $CH_3$ | H | $CH_3$ | H | $NO_2$ | 143-145 |
| 12 | $CH_3$ | H | $CH_3$ | H | $NH_2$ | 136-138 |
| 13 | $CH_3$ | $CH_3$ | H | $NH_2$ | H | 322 nm |
| 14 | $C_2H_5$ | H | H | H | NH-$COCH_3$ | 149-150 |
| 15 | $C_2H_5$ | H | H | Br | NH-$COCH_3$ | 113-114 (268,5 nm) |
| 16 | $C_2H_5$ | H | H | Br | $NH_2$ | 65- 67 (248,5 nm) |
| 17 | $C_2H_5$ | H | H | Cl | $NH_2$ | 283 nm |

Tabelle C (Fortsetzung)

| Nr. | R | $X^1$ | X | Y | Z | λ max. (nm) oder Schmelzpunkt (°C) |
|---|---|---|---|---|---|---|
| 18 | $C_2H_5$ | H | Cl | Cl | $NH_2$ | 290 nm |
| 19 | $C_2H_5$ | H | H | Cl | $NH-COCH_3$ | 267 nm |
| 20 | $C_2H_5$ | H | Br | Br | $NH_2$ | 284,5 nm |
| 21 | $C_2H_5$ | Br | H | $NH-COCH_3$ | Br | 160-165 (290,5 nm) |
| 22 | $C_2H_5$ | H | H | $NH_2$ | H | 318<br>230 nm |
| 23 | $C_2H_5$ | H | H | $NH-COCH_3$ | H | 302 nm |
| 24 | $C_2H_5$ | Br | H | $NH_2$ | Br | 306 nm |
| 25 | $C_2H_5$ | H | H | $NH_2$ | $NO_2$ | 95- 99 |
| 26 | $C_2H_5$ | $NO_2$ | H | $NH_2$ | H | 76- 81 |
| 27 | $C_3H_7(n)$ | H | H | H | $NH-COCH_3$ | 168-171 |
| 28 | $C_2H_7(n)$ | H | Cl | H | $NH-COCH_3$ | 267 nm |
| 29 | $C_3H_7(n)$ | H | Cl | H | $NH_2$ | 218 und<br>283 nm |
| 30 | $C_3H_7(n)$ | H | Cl | Cl | $NH_2$ | 283 nm |
| 31 | $C_3H_7(n)$ | H | H | $NH-COCH_3$ | H | 299 nm |
| 32 | $C_3H_7(n)$ | H | H | $NH_2$ | H | 317 und<br>229 nm |
| 33 | $C_3H_7(n)$ | H | H | H | $NH_2$ | 88- 90 |
| 34 | $CH_3OCH_2$ | H | H | $NHCOCH_3$ | H | 302 nm |
| 35 | $CH_3OCH_2$ | H | Br | H | $NHCOCH_3$ | 79- 83 |
| 36 | $CH_3OCH_2$ | H | Br | H | H | 269 nm |
| 37 | $CH_3OCH_2$ | H | H | $NH_2$ | H | 316 nm |
| 38 | $CH_3OCH_2$ | H | Br | Br | $NH_2$ | 283 nm |
| 39 | $CH_3OCH_2$ | H | Cl | Cl | $NH_2$ | 282 nm |
| 40 | $CH_3OCH_2$ | H | H | Cl | $NH_2$ | 218 und<br>282 nm |
| 41 | $CH_3OCH_2$ | H | H | Br | $NH_2$ | 46- 49<br>286,5 nm |
| 42 | $CH_3OCH_2$ | H | H | H | NHCHO | 276 nm |
| 43 | $CH_3OCH_2$ | H | H | NHCHO | H | 308 nm |
| 44 | $(CH_3)_3C$ | H | Br | H | $NH_2$ | 56- 58<br>284,5 nm |
| 45 | $(CH_3)_3C$ | H | Br | Br | $NH_2$ | 87- 89<br>284,5 nm |
| 46 | $CH_3OCH_2CH_2$ | H | H | $NHCOCH_3$ | H | 294 nm |
| 47 | $CH_3OCH_2CH_2$ | H | H | H | $NHCOCH_3$ | 273 nm |
| 48 | $CH_3OCH_2CH_2$ | H | Br | H | $NHCOCH_3$ | 268 nm |
| 49 | $CH_3OCH_2CH_2$ | H | Br | Br | $NHCOCH_3$ | 275 nm |
| 50 | $(CH_3)_2CH-$ | H | H | $NHCOCH_3$ | H | 296 nm |
| 51 | $(CH_3)_2CH-$ | H | H | H | $NHCOCH_3$ | 275 nm |
| 52 | $(CH_3)_2CH-$ | H | H | Br | $NHCOCH_3$ | 267,5 nm |
| 53 | $(CH_3)_2CH-$ | H | H | Br | $NH_2$ | 220 und<br>285 nm |

Tabelle C (Fortsetzung)

| Nr. | R | $X^1$ | X | Y | Z | $\lambda_{max.}$ (nm) oder Schmelzpunkt (°C) |
|---|---|---|---|---|---|---|
| 54 | $(CH_3)_2CH-$ | H | H | $NH_2$ | H | 228 und 318 nm |
| 55 | $(CH_3)_2CH-$ | H | Br | Br | $NH_2$ | 222 und 285 nm |
| 56 | $(CH_3)_2CH-$ | H | Cl | Cl | $NH_2$ | 221 und 283 nm |
| 57 | $(CH_3)_2CH-$ | H | Cl | H | $NH_2$ | 286 nm |
| 58 | $C_4H_9(n)$ | H | H | $NH-COCH_3$ | H | 296 nm |
| 59 | $C_4H_9(n)$ | H | H | H | $NH-COCH_3$ | 274 nm |
| 60 | $C_4H_9(n)$ | H | H | H | $NH_2$ | 286 nm |
| 61 | $C_4H_9(n)$ | H | H | Br | $NH_2$ | 288 nm |
| 62 | $C_4H_9(n)$ | H | Br | Br | $NH_2$ | 222 und 284,5 nm |
| 63 | $C_4H_9(n)$ | H | Cl | Cl | $NH_2$ | 221 und 284 nm |
| 64 | $(CH_3)_3C-$ | H | H | $NHCOCH_3$ | H | 295 nm |
| 65 | $(CH_3)_3C-$ | H | H | H | $NHCOCH_3$ | 173-175 |
| 66 | $(CH_3)_3C-$ | H | H | Br | $NHCOCH_3$ | 85- 87 |
| 67 | $(CH_3)_3C-$ | H | H | Cl | $NHCOCH_3$ | 220 und 268 nm |
| 68 | $C_6H_{13}(n)$ | H | H | $NHCOCH_3$ | H | 231,5 und 296 nm |
| 69 | $C_6H_{13}(n)$ | H | H | $NH_2$ | H | 228,5 und 316 nm |
| 70 | $C_6H_{13}(n)$ | H | H | H | $NHCOCH_3$ | 273 nm |
| 71 | $C_6H_{13}(n)$ | H | H | H | $NH_2$ | 284 nm |
| 72 | $C_6H_{13}(n)$ | H | H | Br | $NH_2$ | 286 nm |
| 73 | $C_6H_{13}(n)$ | H | H | Br | $NHCOCH_3$ | 287 nm |
| 74 | $C_6H_{13}(n)$ | H | H | Cl | $NHCOCH_3$ | 268 nm |
| 75 | $C_6H_{13}(n)$ | H | Br | Br | $NH_2$ | 285 nm |
| 76 | $C_6H_{13}(n)$ | H | Cl | Cl | $NH_2$ | 284 nm |
| 77 | $C_7H_{15}(n)$ | H | Cl | Cl | $NH_2$ | 285 nm |
| 78 | $C_7H_{15}(n)$ | H | H | Cl | $NHCOCH_3$ | 268,5 nm |
| 79 | $C_7H_{15}(n)$ | H | H | H | $NHCOCH_3$ | 274 nm |
| 80 | $C_7H_{15}(n)$ | H | H | Br | $NHCOCH_3$ | 276 nm |
| 81 | $C_7H_{15}(n)$ | H | H | Br | $NH_2$ | 284,5 und 220 nm |
| 82 | $C_7H_{15}(n)$ | H | Br | Br | $NH_2$ | 285 nm |
| 83 | $C_7H_{15}(n)$ | H | H | $NH_2$ | H | 316,5 und 228 nm |
| 84 | $C_7H_{15}(n)$ | H | H | $NHCOCH_3$ | H | 295 und 231 nm |
| 85 | $C_7H_{15}(n)$ | H | H | Cl | $NH_2$ | 285 nm |
| 86 | $C_7H_{15}(n)$ | H | H | $NH_2$ | Cl | 320 nm |
| 87 | $C_4H_9(n)CH-$<br>$C_2H_5$ | H | Br | Br | $NH_2$ | 285 nm |

Tabelle C (Fortsetzung)

| Nr. | R | $X^1$ | X | Y | Z | $\lambda_{max.}$ (nm) oder Schmelzpunkt (°C) |
|---|---|---|---|---|---|---|
| 88 | $C_4H_9(n)CH-$<br>$C_2H_5$ | H | H | Br | $NH_2$ | 284 nm |
| 89 | $C_4H_9(n)CH-$<br>$C_2H_5$ | H | H | Cl | $NHCOCH_3$ | 25 |
| 90 | $C_4H_9(n)CH-$<br>$C_2H_5$ | H | H | Br | $NHCOCH_3$ | 25 |
| 91 | $C_4H_9(n)CH-$<br>$C_2H_5$ | H | H | Br | $NH_2$ | 20 |
| 92 | $C_4H_9(n)CH-$<br>$C_2H_5$ | H | H | H | $NH-COC_2H_5$ | 48- 53 |
| 93 | $C_4H_9(n)CH-$<br>$C_2H_5$ | H | H | $NH_2$ | Cl | 10- 16 |
| 94 | $C_4H_9(n)CH-$<br>$C_2H_5$ | H | H | H | $NH_2$ | 38- 40 |
| 95 | $(CH_3)_3C(CH_2)_5-$ | H | H | H | H | 317 und<br>228 nm |
| 96 | $(CH_3)_3C(CH_2)_5-$ | H | H | $NHCOCH_3$ | H | 296 nm |
| 97 | $(CH_3)_3C(CH_2)_5-$ | H | H | H | $NHCOCH_3$ | 269 nm |
| 98 | $(CH_3)_3C(CH_2)_5-$ | H | H | Br | $NHCOCH_3$ | 268,5 nm |
| 99 | $(CH_3)_3C(CH_2)_5-$ | H | H | Br | $NH_2$ | 287 nm |
| 100 | $(CH_3)_3C(CH_2)_5-$ | H | Br | Br | $NH_2$ | 285 nm |
| 101 | $CH_3(CH_2)_{10}-$ | H | Br | Br | $NH_2$ | 286 nm |
| 102 | $CH_3(CH_2)_{10}-$ | H | H | Br | $NH_2$ | 287 nm |
| 103 | $CH_3(CH_2)_{10}-$ | H | H | H | $NH_2$ | 285 nm |
| 104 | $CH_3(CH_2)_{10}-$ | H | H | H | $NHCOCH_3$ | 296 nm |
| 105 | $CH_3(CH_2)_{10}-$ | H | H | Br | $NHCOCH_3$ | 269 nm |
| 106 | $CH_3(CH_2)_{10}-$ | H | Br | Br | $NH_2$ | 286 nm |
| 107 | $CH_3(CH_2)_{10}-$ | H | H | $NHCOCH_3$ | H | 296,5 nm |
| 108 | $CH_3(CH_2)_{10}-$ | H | H | $NH_2$ | H | 319 nm |
| 109 | $CH_3(CH_2)_{14}-$ | H | H | $NH_2$ | H | |
| 110 | $CH_3(CH_2)_{14}-$ | H | H | H | $NHCOCH_3$ | 78- 85 |
| 111 | $CH_3(CH_2)_{14}-$ | H | H | H | $NH_2$ | 285,5 nm<br>50- 60 |
| 112 | $CH_3(CH_2)_{14}-$ | H | H | Br | $NH_2$ | 286 nm |
| 113 | $CH_3(CH_2)_{14}-$ | H | Br | Br | $NH_2$ | 287 nm |
| 114 | $CH_3(CH_2)_{14}-$ | H | H | Br | $NHCOCH_3$ | 270 nm |
| 115 | $CH_3(CH_2)_{14}-$ | H | H | $NH_2$ | H | 320 nm |
| 116 | $C_{17}H_{35}$ | H | H | H | $NHCOCH_3$ | 80- 85 |
| 117 | $CH_3(CH_2)_{16}-$ | H | H | $NH_2$ | H | 319 nm |
| 118 | $CH_3(CH_2)_{16}-$ | H | H | H | $NH_2$ | 286 nm |
| 119 | $CH_3(CH_2)_{16}-$ | H | H | Br | $NH_2$ | 287 nm |
| 120 | $CH_3(CH_2)_{16}-$ | H | Br | Br | $NH_2$ | 288 nm |
| 121 | $CH_3(CH_2)_{16}-$ | H | H | Br | $NHCOCH_3$ | 274 nm |

Tabelle C (Fortsetzung)

| Nr. | R | $X^1$ | X | Y | Z | $\lambda_{max.}$ (nm) oder Schmelzpunkt (°C) |
|---|---|---|---|---|---|---|
| 122 | 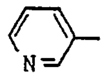 | H | H | H | $NHCOCH_3$ | 250-253 |
| 123 | $C_6H_5$ | H | H | H | $NHCOCH_3$ | 180-183 |
| 123a | $C_6H_5$ | H | H | $NHCOCH_3$ | H | 190-193 |
| 124 | $C_6H_5$ | H | H | Br | $NHCOCH_3$ | 268,5 nm |
| 125 | $C_6H_5$ | H | Br | Br | $NHCOCH_3$ | 269 nm |
| 126 | $C_6H_5$ | H | Cl | Cl | $NHCOCH_3$ | 266 nm |
| 127 | $C_6H_5$ | H | Cl | Cl | $NH_2$ | 142-145 |
| 128 | $C_6H_5$ | H | H | Br | $NH_2$ | 289 nm |
| 129 | $C_6H_5$ | H | H | Cl | $NH_2$ | 289 nm |
| 130 | $C_6H_5$ | H | H | $NH_2$ | H | 320 nm<br>143-145 |
| 131 | 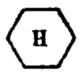 | H | H | $NH_2$ | H | 317 nm |
| 132 | 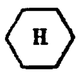 | H | H | H | $NH_2$ | 287 nm |
| 133 | 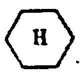 | H | H | H | $NHCOCH_3$ | 275 nm |
| 134 | 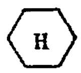 | H | H | Br | $NHCOCH_3$ | 268 nm |
| 135 | $C_6H_5OCH_2-$ | H | H | H | $NHCOCH_3$ | 165<br>275,0 nm |
| 135a | $C_6H_5OCH_2-$ | H | $NH_2$ | H | H | 115 |
| 136 | $C_6H_5OCH_2-$ | H | H | H | $NH_2$ | 110-112 |
| 137 | $C_6H_5CH_2OCH_2-$ | H | H | H | $NH_2$ | 90- 94 |
| 138 | $C_6H_5CH_2OCH_2-$ | H | H | $NH_2$ | H | 318 nm |
| 139 | 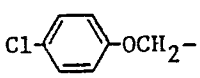 | H | H | $NH_2$ | H | 319 nm |
| 140 | 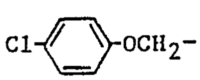 | H | H | H | $NH_2$ | 286 nm |
| 141 | 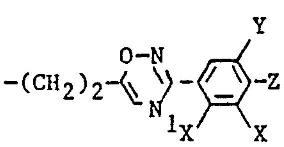 | H | H | $NHCOCH_3$ | H | 295 nm |
| 142 | 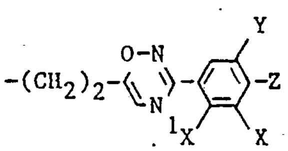 | H | H | $NH_2$ | H | 317 nm |
| 143 | 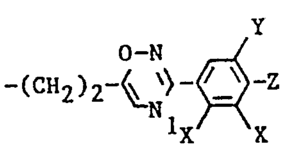 | H | H | H | $NH_2$ | 283 nm |

Tabelle C (Fortsetzung)

| Nr. | R | $X^1$ | X | Y | Z | $\lambda_{max.}$ (nm) oder Schmelzpunkt (°C) |
|---|---|---|---|---|---|---|
| 144 | $-(CH_2)_2-$ 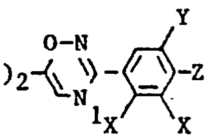 | H | H | H | $NHCOCH_3$ | 274 nm |
| 145 | $-(CH_2)_2-$ 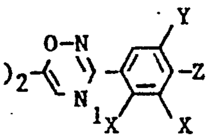 | H | H | Br | $NHCOCH_3$ | 268 nm |
| 146 | $-(CH_2)_2-$ 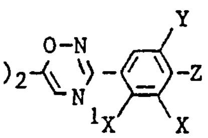 | H | H | Br | $NH_2$ | 284 nm |
| 147 | $-C(CH_3)_2-$ 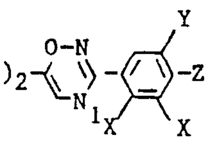 | H | H | Br | $NH_2$ | 269 nm |
| 148 | $-C(CH_3)_2-$ 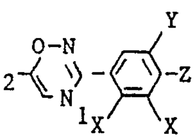 | H | H | $NH_2$ | H | 316 nm |
| 149 | $-(CH_2)_4-$ 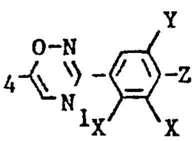 | H | H | $NH_2$ | H | 318 nm |
| 150 | $-(CH_2)_4-$ 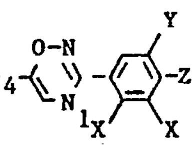 | H | H | H | $NH_2$ | 284,5 nm |
| 151 | $-(CH_2)_4-$ 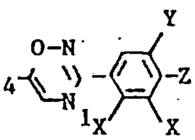 | H | H | Br | $NH_2$ | 289 nm |
| 152 | $C_6H_5CH_2-$ | H | H | H | $NH_2$ | 285 nm |
| 153 | $C_6H_5CH_2-$ | H | H | $NH_2$ | H | 319 nm |
| 154 | $CH_3O-$ 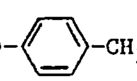 $-CH_2-$ | H | H | $NH_2$ | H | 319 und 228 nm |
| 155 | $CH_3O-$ 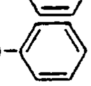 $-CH_2-$ | H | H | H | $NH_2$ | 281 nm |
| 156 | $(CH_3)_3C-$ 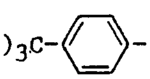 $-$ | H | H | H | $NH_2$ | 103-105 279,5 nm |

Tabelle C (Fortsetzung)

| Nr. | R | $X^1$ | X | Y | Z | $\lambda_{max.}$ (nm) oder Schmelzpunkt (°C) |
|---|---|---|---|---|---|---|
| 157 | $(CH_3)_3C-$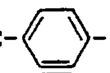- | H | H | H | $NHCOCH_3$ | 183-185<br>273,5 nm |
| 158 | $(CH_3)_3C-$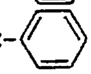- | H | H | $NH_2$ | H | 319 und<br>228 nm |
| 159 | $-CH_3$ | H | H | $NH_2$ | $OCH_3$ | 325 nm |
| 160 | $C_4H_9(n)CH(C_2H_5)-$ | H | H | $NH_2$ | $OCH_3$ | 325 nm |
| 161 | $CH_3O_2CC_2H_4$ | H | H | H | $NH_2$ | 105-107 |
| 162 | $HO_2CC_2H_4$ | H | H | $NH_2$ | H | 318 nm |
| 163 | $HO_2CC_2H_4$ | H | H | H | $NH_2$ | 284 nm |
| 164 | $HO_2CC_2H_4$ | H | H | $NH_2$ | Br | 321 nm |
| 165 | $HO_2CC_2H_4$ | H | H | $NHCOCH_3$ | H | 295,5 nm |

Beispiel 4

370 Teile der Verbindung der Formel

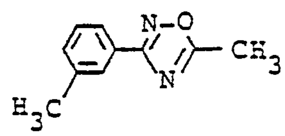 (Öl)

werden bei 15 bis 20 °C in 800 g Schwefelsäure (96 %ig) eingetragen. Dann läßt man bei 0 bis 10 °C 150 Raumteile konzentrierte Salpetersäure zutropfen und rührt 1 Stunde bei Raumtemperatur nach. Die fertige Nitrierung wird auf Eiswasser ausgerührt und die Fällung auf pH 4,5 bis 7 abgepuffert.

Die ölige Phase wird abgetrennt und mit etwa 1 000 Raumteilen Methanol verrührt. Man erhält eine gelbe Ausfällung. Nach Absaugen, Waschen mit Methanol und Trocknen erhält man 100 Teile des Produktes der wahrscheinlichen Formel

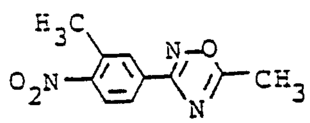

mit einem Schmelzpunkt von 143 bis 146 °C.

Das Filtrat enthält neben einem geringen Anteil dieses Produktes das Isomere der vermutlichen Formel

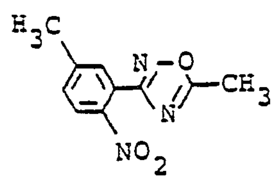,

das durch Eindampfen des Methanols isoliert wird.

Durch katalytische (oder Béchamp-)Reduktion erhält man aus den Nitro-Verbindungen die Amine der Formel

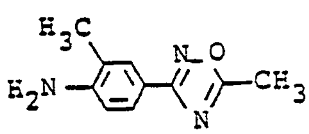,

Schmelzpunkt 136 bis 138 °C (bzw.

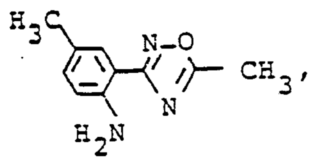

Schmelzbereich 100 bis 135 °C, da dieses Produkt leicht verunreinigt ist).
Verwendet man zur Nitrierung die Oxadiazol-Derivate der Formel

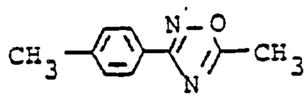

bzw.

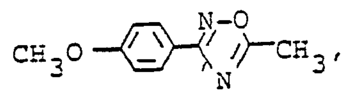

so erhält man einheitliche Nitroderivate der Formeln

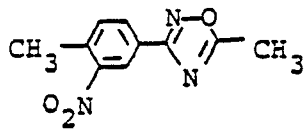

bzw.

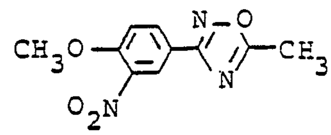

die wie üblich zu den entsprechenden Aminen reduziert werden können.

Analog zu den beschriebenen Methoden kann man die in den Tabellen D und E aufgeführten gelben Farbstoffe der allgemeinen Formeln V und VI herstellen.

Tabelle D

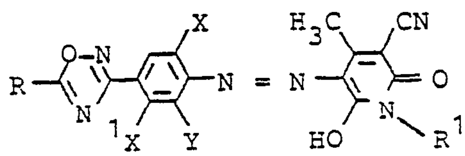

(V)

| Nr. | R | $R^1$ | X | $X^1$ | Y | $\lambda_{max.}$ (nm) |
|---|---|---|---|---|---|---|
| 1 | $C_4H_9(n)CH-$<br>$C_2H_5$ | $CH_3$ | H | H | H | 438 |
| 2 | $C_4H_9(n)CH-$<br>$C_2H_5$ | $C_2H_5$ | H | H | H | 439,5 |
| 3 | $C_4H_9(n)CH-$<br>$C_2H_5$ | $C_3H_7(n)$ | H | H | H | 439,5 |
| 4 | $C_4H_9(n)CH-$<br>$C_2H_5$ | $C_3H_7(i)$ | H | H | H | 439,5 |
| 5 | $C_4H_9(n)CH-$<br>$C_2H_5$ | $C_4H_9(n)$ | H | H | H | 439,5 |
| 6 | $C_4H_9(n)CH-$<br>$C_2H_5$ | $C_4H_9(i)$ | H | H | H | 439,5 |
| 7 | $C_4H_9(n)CH-$<br>$C_2H_5$ | $C_6H_{13}(n)$ | H | H | H | 439,5 |
| 8 | $CH_3(CH_2)_6-$ | $CH_3$ | H | H | H | 439,5 |
| 9 | $CH_3(CH_2)_6-$ | H | H | H | H | 438 |
| 10 | $CH_3(CH_2)_6-$ | $C_2H_5$ | H | H | H | 439 |
| 11 | $CH_3(CH_2)_6-$ | $C_3H_7(n)$ | H | H | H | 439 |
| 12 | $CH_3(CH_2)_6-$ | $C_3H_7(i)$ | H | H | H | 439 |

Tabelle D (Fortsetzung)

| Nr. | R | $R^1$ | X | $X^1$ | Y | $\lambda_{max.}$ (nm) |
|---|---|---|---|---|---|---|
| 13 | 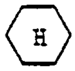 | $CH_3$ | H | H | H | 439 |
| 14 | 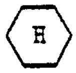 | $C_2H_5$ | H | H | H | 439 |
| 15 | 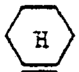 | $C_3H_7(n)$ | H | H | H | 439 |
| 16 | 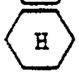 | $C_3H_7(i)$ | H | H | H | 439 |
| 17 | $C_4H_9(n)CH-$<br>$C_2H_5$ | $C_2H_4OCH_3$ | H | H | H | 439 |
| 18 | $C_4H_9(n)CH-$<br>$C_2H_5$ | $C_3H_6OCH_3$ | H | H | H | 439 |
| 19 | $C_6H_5CH_2OC_2H_4$ | $CH_3$ | H | H | H | 439,5 |
| 20 | $HO_2CC_2H_4$ | H | H | H | H | 438 |
| 21 | $HO_2CC_2H_4$ | $C_3H_6OCH_3$ | H | H | H | 438,5 |
| 22 | $HO_2CC_2H_4$ | $C_2H_4OC_2H_4OH$ | H | H | H | 438,5 |
| 23 | $HO_2CC_2H_4$ | $C_3H_6OC_4H_8OH$ | H | H | H | 438,5 |
| 24 | $HO_2CC_2H_4$ | $C_3H_6OC_2H_4OCH_3$ | H | H | H | 438,5 |
| 25 | $HO_2CCH_2-$ | $C_3H_6OC_2H_4OCH_3$ | H | H | H | 439 |
| 26 | $HO_2CCH_2-$ | $C_3H_6OC_4H_8OH$ | H | H | H | 439 |
| 27 | $C_4H_9(n)CH-$<br>$C_2H_5$ | $CH_2CH=CH_2$ | H | H | H | 439,5 |
| 28 | $C_6H_5OCH_2-$ | $CH_3$ | H | H | H | 439 |
| 29 | $C_6H_5OCH_2-$ | $C_2H_5$ | H | H | H | 439 |
| 30 | $CH_3$ | $C_2H_5$ | H | H | H | 437,5 |
| 31 | $CH_3$ | $CH_3$ | H | H | H | 438 |
| 32 | $CH_3$ | H | H | H | H | 438 |
| 33 | $C_2H_5$ | H | H | H | H | 438 |
| 34 | $C_2H_5$ | $CH_3$ | H | H | H | 438 |
| 35 | $C_2H_5$ | $C_2H_5$ | H | H | H | 439 |
| 36 | $C_2H_5$ | $C_3H_7(n)$ | H | H | H | 439 |
| 37 | $C_2H_5$ | $CHCH_2=CH_2$ | H | H | H | 440 |
| 38 | $C_3H_7(n)$ | $CH_3$ | H | H | H | 439 |
| 39 | $C_3H_7(n)$ | $C_2H_5$ | H | H | H | 439,5 |
| 40 | $C_3H_7(n)$ | $C_4H_9(n)$ | H | H | H | 439,5 |
| 41 | $C_4H_9(n)CH-$<br>$C_2H_5$ | H | Br | H | H | 438 |
| 42 | $C_4H_9(n)CH-$<br>$C_2H_5$ | $CH_3$ | Br | H | H | 438 |
| 43 | $C_4H_9(n)CH-$<br>$C_2H_5$ | $CH_3$ | Cl | H | H | 438 |
| 44 | $C_4H_9(n)CH-$<br>$C_2H_5$ | $CH_3$ | $NO_2$ | H | H | 447 |
| 45 | $C_4H_9(n)CH-$<br>$C_2H_5$ | H | $NO_2$ | H | H | 446 |
| 46 | $C_4H_9(n)CH-$<br>$C_2H_5$ | $C_2H_5$ | $NO_2$ | H | H | 448 |

Tabelle E

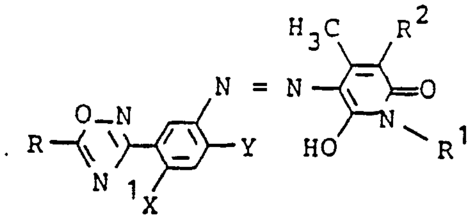

(VI)

| Nr. | R | $R^1$ | $R^2$ | Y | $X^1$ | $\lambda_{max.}$ (nm) oder Schmelzpunkt (°C) |
|---|---|---|---|---|---|---|
| 1 | $C_3H_7(n)$ | $CH_3$ | H | $NO_2$ | H | 436 nm |
| 2 | $C_3H_7(n)$ | $C_2H_5$ | H | $NO_2$ | H | 437 nm |
| 3 | $C_3H_7(n)$ | $C_3H_7(n)$ | H | $NO_2$ | H | 437 nm |
| 4 | $C_3H_7(n)$ | $C_4H_9(n)$ | H | $NO_2$ | H | 437 nm |
| 5 | $C_3H_7(n)$ | $C_6H_{13}(n)$ | H | $NO_2$ | H | 437 nm |
| 6 | $C_7H_{15}(n)$ | H | H | $NO_2$ | H | 110-116 |
| 7 | $C_7H_{15}(n)$ | $CH_3$ | H | $NO_2$ | H | 103-108 |
| 8 | $C_7H_{15}(n)$ | $C_2H_5$ | H | $NO_2$ | H | 105-109 |
| 9 | $C_7H_{15}(n)$ | $C_3H_7(n)$ | H | $NO_2$ | H | 100-103 |
| 10 | $C_4H_9(n)CH-$<br>$C_2H_5$ | H | H | $NO_2$ | H | 436 nm |
| 11 | $C_4H_9(n)CH-$<br>$C_2H_5$ | H | $COCH_3$ | $NO_2$ | H | 439 nm |
| 12 | $C_4H_9(n)CH-$<br>$C_2H_5$ | $CH_3$ | H | $NO_2$ | H | 438 nm |
| 13 | $C_4H_9(n)CH-$<br>$C_2H_5$ | $C_2H_5$ | H | $NO_2$ | H | 438 nm |
| 14 | $C_4H_9(n)CH-$<br>$C_2H_5$ | $C_3H_7(n)$ | H | $NO_2$ | H | 438 nm |
| 15 | $C_8H_{17}(n)$ | H | H | $NO_2$ | H | 437 nm |
| 16 | $C_8H_{17}(n)$ | $CH_3$ | H | $NO_2$ | H | 438 nm |
| 17 | $C_8H_{17}(n)$ | $C_2H_5$ | H | $NO_2$ | H | 438 nm |
| 18 | $C_4H_9(n)CH-$<br>$C_2H_5$ | H | CN | Br | H | 429 nm |
| 19 | $C_4H_9(n)CH-$<br>$C_2H_5$ | H | CN | Cl | Cl | 425 nm |
| 20 | $C_4H_9(n)CH-$<br>$C_2H_5$ | $CH_3$ | CN | Cl | Cl | 426 nm |
| 21 | $C_4H_9(n)CH-$<br>$C_2H_5$ | $CH_3$ | CN | Br | H | 429 nm |
| 22 | $(CH_3)_3$- 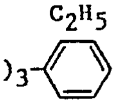 | $C_4H_9(n)$ | CN | Cl | Cl | 425 nm |
| 23 | $(CH_3)_3$- 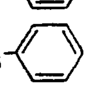 | $C_4H_9(n)$ | CN | Br | Br | 425 nm |
| 24 | $C_8H_{17}(n)$ | $CH_2CH_2OCH_3$ | CN | H | H | 428 nm |

Tabelle E (Fortsetzung)

| Nr. | R | $R^1$ | $R^2$ | Y | $X^1$ | $\lambda_{max.}$ (nm) oder Schmelzpunkt (°C) |
|---|---|---|---|---|---|---|
| 25 | $C_8H_{17}(n)$ | $(CH_2)_3OCH_3$ | CN | H | H | 428 nm |
| 26 | $C_4H_9(n)OC_2H_4$ | H | CN | H | H | 427,5 nm |
| 27 | $C_4H_9(n)OC_2H_4$ | $CH_3$ | CN | Cl | H | 428 nm |
| 28 | $C_4H_9(n)OC_2H_4$ | $CH_3$ | H | $NO_2$ | H | 436 nm |
| 29 | $C_4H_9(n)OC_2H_4$ | $C_2H_5$ | H | $NO_2$ | H | 436 nm |
| 30 | $C_4H_9(n)CH-OC_2H_4$<br>$C_2H_5$ | H | H | $NO_2$ | H | 436 nm |
| 31 | $C_4H_9(n)CH-OC_2H_4$<br>$C_2H_5$ | $CH_3$ | H | $NO_2$ | H | 437 nm |
| 32 | $C_4H_9(n)CH-OC_2H_4$<br>$C_2H_5$ | H | CN | H | H | 427,5 nm |
| 33 | 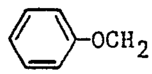 | $C_3H_7(n)$ | CN | H | H | 428,5 nm |
| 34 | 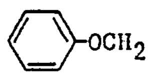 | $C_2H_5$ | CN | H | H | 428,5 nm |
| 35 | 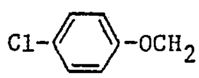 | $C_2H_5$ | CN | H | H | 428,5 nm |
| 36 | 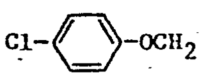 | $CH_3$ | CN | H | H | 428,5 nm |
| 37 | 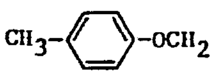 | $CH_3$ | CN | H | H | 428,5 nm |
| 38 | 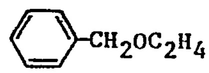 | $CH_3$ | CN | H | H | 428,5 nm |
| 39 | $HO_2CC_2H_4$ | H | CN | H | H | 428,5 nm |
| 40 | $HO_2CC_2H_4$ | H | $CONH_2$ | H | H | 412 nm |
| 41 | $HO_2CC_2H_4$ | H | H | H | H | 410 nm |
| 42 | $HO_2CC_2H_4$ | $CH_3$ | H | H | H | 410 nm |
| 43 | $HO_2CC_2H_4$ | $CH_3$ | $CONH_2$ | H | H | 413 nm |
| 44 | $HO_2CC_2H_4$ | $C_3H_6OCH_3$ | $CONH_2$ | H | H | 413 nm |
| 45 | $HO_2CC_2H_4$ | $C_3H_6OCH_3$ | H | H | H | 412 nm |
| 46 | $HO_2CC_2H_4$ | $C_3H_6OCH_3$ | CN | H | H | 412 nm |
| 47 | $HO_2CC_2H_4$ | $C_3H_6OC_2H_4OH$ | CN | H | H | 429 nm |
| 48 | $HO_2CC_2H_4$ | $C_3H_6OC_4H_8OH$ | CN | H | H | 429 nm |
| 49 | $C_4H_9(n)CH-$<br>$C_2H_5$ | H | $COCH_3$ | H | H | 410 nm |

Analog zu der in den Beispielen beschriebenen Arbeitsweise können die in der Tabelle genannten grüngelben Farbstoffe der allgemeinen Formel VII hergestellt werden.

Tabelle F

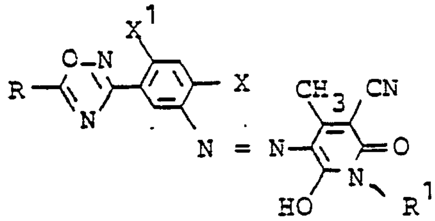

(VII)

| Nr. | R | $R^1$ | X | $X^1$ | $\lambda_{max.}$ (nm) oder Schmelzpunkt (°C) |
|---|---|---|---|---|---|
| 1 | $C_4H_9(n)CH(C_2H_5)-$ | $CH_3$ | H | H | 428 nm |
| 2 | $C_4H_9(n)CH(C_2H_5)-$ | $C_2H_5$ | H | H | 428,5 nm |
| 3 | $C_4H_9(n)CH(C_2H_5)-$ | $C_3H_7(n)$ | H | H | 428,5 nm |
| 4 | $C_4H_9(n)CH(C_2H_5)-$ | $C_3H_7(i)$ | H | H | 428,5 nm |
| 5 | $C_4H_9(n)CH(C_2H_5)-$ | $C_4H_9(n)$ | H | H | 429 nm |
| 6 | $C_4H_9(n)CH(C_2H_5)-$ | $C_4H_9(i)$ | H | H | 429 nm |
| 7 | $C_4H_9(n)CH(C_2H_5)-$ | $C_6H_{13}(n)$ | H | H | 429 nm |
| 8 | $C_4H_9(n)CH(C_2H_5)-$ | 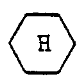 | H | H | 428 nm |
| 9 | $C_4H_9(n)CH(C_2H_5)-$ | $C_2H_4OH$ | H | H | 428 nm |
| 10 | $C_4H_9(n)CH(C_2H_5)-$ | $C_3H_6OH$ | H | H | 428 nm |
| 11 | $C_4H_9(n)CH(C_2H_5)-$ | $C_6H_{13}OH$ | H | H | 428 nm |
| 12 | $C_4H_9(n)CH(C_2H_5)-$ | $C_2H_4OCH_3$ | H | H | 428 nm |
| 13 | $C_4H_9(n)CH(C_2H_5)-$ | $C_3H_6OCH$ | H | H | 428 nm |
| 14 | $C_4H_9(n)CH(C_2H_5)-$ | $C_3H_6OC_2H_5$ | H | H | 428 nm |
| 15 | $C_4H_9(n)CH(C_2H_5)-$ | $C_2H_4OC_4H_9$ | H | H | 428 nm |
| 16 | $C_4H_9(n)CH(C_2H_5)-$ | $CH_3$ | Br | H | 429 nm |

Tabelle F (Fortsetzung)

| Nr. | R | $R^1$ | X | $X^1$ | $\lambda_{max.}$ (nm) oder Schmelzpunkt (°C) |
|---|---|---|---|---|---|
| 17 | $C_4H_9(n)CH-$<br>$C_2H_5$ | $C_4H_9(n)$ | Br | Br | 416 nm |
| 18 | $C_4H_9(n)CH-$<br>$C_2H_5$ | $CH_2CH=CH_2$ | H | H | 429 nm |
| 19 | $C_7H_{15}(n)$ | H | H | H | 427 nm |
| 20 | $C_7H_{15}(n)$ | $CH_3$ | H | H | 427,5 nm<br>131-133 |
| 21 | $C_7H_{15}(n)$ | $C_2H_5$ | H | H | 427,5 nm<br>142-145 |
| 22 | $C_7H_{15}(n)$ | $C_3H_7$ | H | H | 427,5 nm |
| 23 | $C_6H_{13}(n)$ | H | H | H | 427,5 nm |
| 24 | $C_6H_{13}(n)$ | $CH_3$ | H | H | 427,5 nm |
| 25 | $C_6H_{13}(n)$ | $C_2H_5$ | H | H | 427,5 nm |
| 26 | $C_6H_{13}(n)$ | $CH_2CH=CH_2$ | H | H | 427,5 nm |
| 27 | $C_3H_7(n)$ | H | H | H | 427 nm |
| 28 | $C_3H_7(n)$ | $CH_3$ | H | H | 427 nm |
| 29 | $C_3H_7(n)$ | $C_2H_5$ | H | H | 427 nm |
| 30 | $CH_3$ | H | H | H | 427 nm |
| 31 | $CH_3$ | $CH_3$ | H | H | 427 nm |
| 32 | $CH_3$ | $C_2H_5$ | H | H | 427 nm<br>228-231 |
| 33 | $CH_3$ | $C_4H_9(n)$ | H | H | 427 nm |
| 34 | $C_6H_5OCH_2$ | $CH(CH_3)_2$ | H | H | 428 nm |
| 35 | $C_6H_5OCH_2$ | $CH_3$ | H | H | 428 nm |
| 36 | $C_6H_5OCH_2$ | $C_2H_5$ | H | H | 428 nm |
| 37 | $C_6H_5OCH_2$ | $C_3H_7(n)$ | H | H | 428 nm |
| 38 | $CH_3OCH_3$ | $C_3H_7(n)$ | H | H | 428 nm |
| 39 | $CH_3OCH_3$ | $C_2H_5$ | H | H | 428 nm |
| 40 | $CH_3OCH_3$ | $C_3H_7(i)$ | H | H | 428 nm |
| 41 | $CH_3O_2C-C_2H_4$ | $C_2H_5$ | H | H | 429 nm |
| 42 | $CH_3O_2C-C_2H_4$ | $CH_3$ | H | H | 429 nm |
| 43 | $C_2H_5O_2C-C_2H_4$ | $C_2H_5$ | H | H | 429 nm |
| 44 | $H_9C_4O_2C-C_2H_4$ | $C_2H_5$ | H | H | 429 nm |
| 45 | $H_{13}C_6O_2C-C_2H_4$ | $C_2H_5$ | H | H | 429 nm |
| 46 | $C_4H_9O_2H_4O_2CC_2H_4$ | $C_2H_5$ | H | H | 429 nm |
| 47 | $H_3-C_2$<br>$CACH_2O_2CC_2H_4$<br>$H_9C_4$ | $C_2H_5$ | H | H | 429 nm |
| 48 | 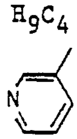 | $C_2H_5$ | H | H | 430 nm |

Beispiel 5

23,5 Teile der Diazokomponente der Formel

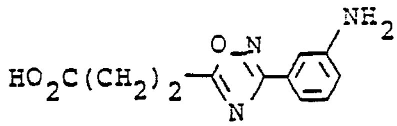

werden die üblich diazotiert. Die erhaltene Diazoniumsalzlösung läßt man unter sehr gutem Rühren in eine Lösung von 24 Teilen der Kupplungskomponente der Formel

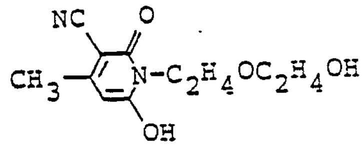

in 500 Teilen Wasser, 200 Teilen Eis und 10 Teilen Natriumcarbonat einlaufen.

Die Kupplung wird auf einen pH-Wert von 3,5 bis 4,5 gestellt und der ausgefallene Farbstoff der Formel

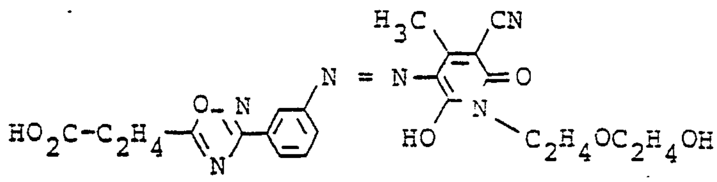

abgesaugt und wie üblich isoliert. Nach dem Trocknen erhält man 46 Teile eines gelben Pulvers, das Polyamidgewebe und Leder in grünstichig gelben Tönen mit guten Echtheiten färbt.

Analog zu der in Beispiel 5 beschriebenen Arbeitsweise kann man die in Tabelle G aufgeführten gelben Farbstoffe der allgemeinen Formel VIII erhalten.

Tabelle G

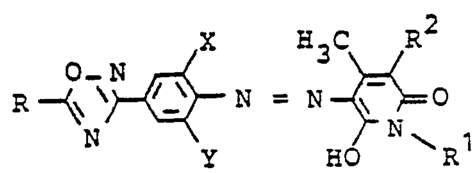

(VIII)

| Nr. | R | $R^1$ | $R^2$ | X | H | $\lambda_{max.}$ (nm) |
|---|---|---|---|---|---|---|
| 1 | $C_7H_{15}(n)$ | H | H | $NO_2$ | H | 435 nm |
| 2 | $C_7H_{15}(n)$ | H | $COCH_3$ | $NO_2$ | H | 439 nm |
| 3 | $C_7H_{15}(n)$ | $CH_3$ | $COCH_3$ | $NO_2$ | H | 438 nm |
| 4 | $C_7H_{15}(n)$ | $CH_3$ | H | $NO_2$ | H | 435 nm |
| 5 | $C_4H_9(n)-CH-$<br>$C_2H_5$ | H | H | $NO_2$ | H | 435 nm |
| 6 | $C_4H_9(n)-CH-$<br>$C_2H_5$ | H | $COCH_3$ | $NO_2$ | H | 439 nm |
| 7 | $C_4H_9(n)-CH-$<br>$C_2H_5$ | $CH_3$ | $COCH_3$ | $NO_2$ | H | 438 nm |
| 8 | $C_4H_9(n)-CH-$<br>$C_2H_5$ | $CH_3$ | H | $NO_2$ | H | 436 nm |

Tabelle G (Fortsetzung)

| Nr. | R | $R^1$ | $R^2$ | X | H | $\lambda_{max.}$ (nm) |
|---|---|---|---|---|---|---|
| 9 | $C_4H_9(n)$-CH-<br>$C_2H_5$ | H | CN | $NO_2$ | H | 446 nm |
| 10 | $C_4H_9(n)$-CH-<br>$C_2H_5$ | $CH_3$ | CN | $NO_2$ | H | 447 nm |
| 11 | $C_4H_9(n)$-CH-<br>$C_2H_5$ | $CH_3$ | CN | Br | H | 438 nm |
| 12 | $C_4H_9(n)$-CH-<br>$C_2H_5$ | H | CN | Br | H | 439 nm |
| 13 | $C_4H_9(n)$-CH-<br>$C_2H_5$ | H | CN | Cl | H | 439 nm |
| 14 | $C_4H_9(n)$CH-<br>$C_2H_5$ | $C_2H_5$ | H | $NO_2$ | H | 437 nm |
| 15 | $C_4H_9(n)$CH-<br>$C_2H_5$ | $C_4H_9(n)$ | H | $NO_2$ | H | 437 nm |
| 16 | $C_6H_5OCH_2$ | $C_2H_5$ | CN | H | H | 440 nm |
| 17 | $C_6H_5OCH_2$ | $CH_3$ | CN | H | H | 440 nm |
| 18 | $C_{11}H_{23}(n)$ | $C_4H_9$ | CN | H | H | 440 nm |
| 19 | $C_{11}H_{23}(n)$ | $C_6H_{13}(n)$ | CN | H | H | 440 nm |
| 20 | $C_{11}H_{23}(n)$ | $C_3H_6OCH_3$ | CN | H | H | 440 nm |
| 21 | $C_4H_9(n)$-CH-<br>$C_2H_5$ | $C_3H_6OCH_3$ | CN | H | H | 440 nm |
| 22 | $C_4H_9(n)$-CH-<br>$C_2H_5$ | $C_6H_{13}(n)$ | $C_6H_{13}(n)$ | H | H | 440 nm |
| 23 | $C_4H_9(n)$-CH-<br>$C_2H_5$ | $C_3H_6OC_4H_8OH$ | CN | H | H | 440 nm |
| 24 | $C_{11}H_{23}(n)$ | $C_3H_6OC_4H_8OH$ | CN | H | H | 440 nm |
| 25 | $C_{15}H_{31}(n)$ | $C_3H_6OC_4H_8OH$ | CN | H | H | 440 nm |
| 26 | $C_{15}H_{31}(n)$ | $C_3H_6OCH_3$ | CN | H | H | 440 nm |
| 27 | $C_{15}H_{31}(n)$ | $C_4H_9(n)$ | CN | H | H | 440 nm |
| 28 | $HO_2CC_2H_4$- | H | CN | H | H | 440 nm |
| 29 | $HO_2CC_2H_4$- | H | $CONH_2$ | H | H | 426 nm |
| 30 | $HO_2CC_2H_4$- | $CH_3$ | $CONH_2$ | H | H | 426 nm |
| 31 | $HO_2CC_2H_4$- | $CH_3$ | CN | H | H | 440 nm |
| 32 | $HO_2CC_2H_4$- | $CH_3$ | $CONH_2$ | Br | H | 428 nm |
| 33 | $HO_2CC_2H_4$- | $C_2H_5$ | $CONH_2$ | Br | H | 428 nm |
| 34 | $HO_2CC_2H_4$- | $C_2H_5$ | $CONH_2$ | H | H | 426 nm |
| 35 | $HO_2CC_2H_4$- | $C_2H_4OCH_3$ | $CONH_2$ | H | H | 426 nm |
| 36 | $HO_2CC_2H_4$- | $C_2H_4OCH_3$ | CN | H | H | 440 nm |
| 37 | $HO_2CC_2H_4$- | $C_3H_6OCH_3$ | CN | H | H | 440 nm |
| 38 | $HO_2CC_2H_4$- | $C_3H_6OCH_3$ | $CONH_2$ | H | H | 426 nm |
| 39 | $HO_2CC_2H_4$- | $C_3H_6OCH_3$ | $CONH_2$ | Br | H | 428 nm |
| 40 | $HO_2CCH$=CH- | H | CN | H | H | 440 nm |

Tabelle G (Fortsetzung)

| Nr. | R | $R^1$ | $R^2$ | X | H | $\lambda_{max.}$ (nm) |
|---|---|---|---|---|---|---|
| 41 | $HO_2CCH{=}CH-$ | $CH_3$ | CN | H | H | 440 nm |
| 42 | $HO_2CC_2H_4$ | $C_2H_4OH$ | CN | Br | H | 441 nm |
| 43 | $HO_2CC_2H_4$ | $C_3H_6OH$ | CN | Br | H | 440 nm |
| 44 | $HO_2CC_2H_4$ | $C_2H_4OC_2H_4OH$ | CN | H | H | 440 nm |
| 45 | $HO_2CCH{=}CH-$ | $C_3H_6OH$ | CN | H | H | 440 nm |
| 46 | $HO_2CCH{=}CH-$ | $C_2H_4OH$ | CN | H | H | 440 nm |
| 47 | $HO_2CCH{=}CH-$ | $C_2H_4OCH_3$ | CN | H | H | 440 nm |
| 48 | $HO_2CCH{=}CH-$ | $C_3H_6OCH_3$ | CN | H | H | 440 nm |
| 49 | $HO_2CCH{=}CH-$ | $C_2H_4OC_2H_4OH$ | CN | H | H | 440 nm |
| 50 | $HO_2CCH_2$ | $C_2H_4OC_2H_4OH$ | CN | H | H | 440 nm |
| 51 | $HO_2CCH_2$ | $C_2H_4OH$ | CN | H | H | 440 nm |
| 52 | $HO_2CCH_2$ | $C_3H_6OH$ | CN | H | H | 440 nm |
| 53 | $HO_2CCH{=}CH-$ | $C_2H_4OCH_3$ | $CONH_2$ | H | H | 426 nm |
| 54 | $HO_2CCH{=}CH-$ | $C_3H_6OCH_3$ | $CONH_2$ | H | H | 427 nm |
| 55 | $HO_2C(CH_2)_3-$ | $C_3H_6OCH_3$ | CN | H | H | 440 nm |
| 56 | $HO_2C(CH_2)_3-$ | $C_2H_4OH$ | CN | H | H | 440 nm |
| 57 | $HO_2C(CH_2)_4-$ | $C_2H_4OH$ | CN | H | H | 440 nm |
| 58 | $HO_2C(CH_2)_4-$ | $C_2H_4OC_2H_4OH$ | CN | H | H | 440 nm |
| 59 | $C_3H_7(n)-$ | $CH_3$ | CN | Br | Br | 416 nm |
| 60 | $C_4H_9(n)-CH-$<br>$C_2H_5$ | H | $COCH_3$ | H | H | 428,5 nm |
| 61 | $C_4H_9(n)-CH-$<br>$C_2H_5$ | H | $COCH_3$ | Br | H | 428,5 nm |
| 62 | $CH_3O_2CC_2H_4$ | $C_2H_5$ | CN | H | H | 439 nm |

Analog der in den Beispielen 9, 10 und 11 beschriebenen Weise können die in Tabelle H genannten Farbstoffe hergestellt werden.

Tabelle H

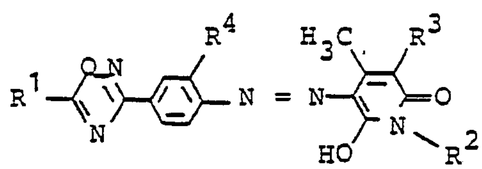

| Nr. | $R^1$ | $R^2$ | $R^3$ | $R^4$ | Farbton | $\lambda_{max.}$ (nm) |
|---|---|---|---|---|---|---|
| 1 | $C_6H_5$ | $C_{13}H_{27}(n)$ | CN | H | gelb | 440 |
| 2 | $C_6H_5$ | $C_{13}H_{27}(n)$ | CN | Cl | gelb | 442 |
| 3 | $C_6H_5$ | $C_8H_{17}(i)$ | CN | Cl | gelb | 442 |
| 4 | $C_6H_5$ | $C_8H_{17}(i)$ | CN | $OCH_3$ | gelb | 449 |
| 5 | Cl 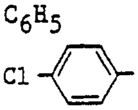 | $C_8H_{17}(i)$ | CN | H | gelb | 441 |
| 6 | $C_3H_7$ | $C_8H_{17}(i)$ | CN | H | gelb | 440 |

Tabelle H (Fortsetzung)

| Nr. | $R^1$ | $R^2$ | $R^3$ | $R^4$ | Farbton | $\lambda_{max.}$ (nm) |
|---|---|---|---|---|---|---|
| 7 | $C_3H_7$ | $C_8H_{17}(i)$ | CN | Cl | gelb | 442 |
| 8 | $CH_3$ | $C_{13}H_{27}(n)$ | $CONH_2$ | H | gelb | 425,5 |
| 9 | $CH_3$ | $C_{13}H_{27}(n)$ | $CONH_2$ | Cl | gelb | 427 |
| 10 | $CH_3$ | $C_{12}H_{25}(n)$ | $COCH_3$ | Cl | gelb | 427,5 |
| 11 | $CH_3$ | $C_{12}H_{25}(n)$ | $COCH_3$ | H | gelb | 427,5 |
| 12 | $C_4H_9CH(C_2H_5)-$ | $C_4H_9(n)$ | $CONH_2$ | H | gelb | 426 |
| 13 | $C_5H_{11}$ | $C_8H_{17}(i)$ | $CONH_2$ | H | gelb | 426 |

Beispiel 6

21 Teile der Verbindung der Formel

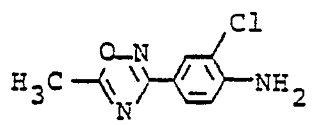

werden über Nacht mit 50 Teilen einer 30 % igen Salzsäure und 1 Teil eines sauer wirksamen Dispergiermittels intensiv verrührt. Dann kühlt man das Gemisch auf 0 bis 5 °C ab und läßt innerhalb von ca. 20 bis 30 Minuten 32 bis 34 Teile einer 23 %igen Natriumnitritlösung unter der Oberfläche der Suspension zulaufen. Die Temperatur hält man dabei durch Zugabe von Eis bei 0 bis 5 °C. Die Diazotierung rührt 2 bis 3 Stunden bei 0 bis 5 °C nach. Dann gibt man ca. 150 Teile Eiswasser hinzu, zerstört Nitrit wie üblich und stellt den pH-Wert der Diazotierung mit wenig Natriumformiat auf 0,5 bis 1,0 ein. Danach läßt man eine Lösung aus 23,6 Teilen 1-(n)-Hexyl-2-hydroxy-3-cyan-4-methyl-pyridon-6, 300 Raumteilen Wasser und 12 Teilen 50 %iger Natronlauge zulaufen.

Die Kupplung ist nach wenigen Minuten beendet. Ausgefallener Farbstoff wird wie üblich abgesaugt, mit Wasser gewaschen und getrocknet. Man erhält 45 Teile eines gelben Pulvers der Formel

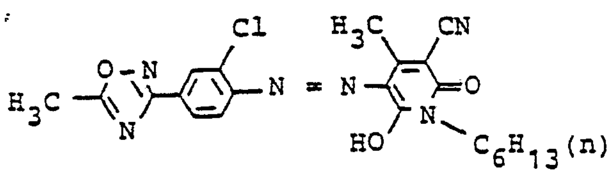

$\lambda_{max.}$ 442 nm

das sich in Dimethylformamid mit gelber Farbe löst und Polyestergewebe in kräftigen, gelben Tönen mit hoher Lichtechtheit anfärbt.

Beispiel 7

24,5 Teile der Diazokomponente der Formel

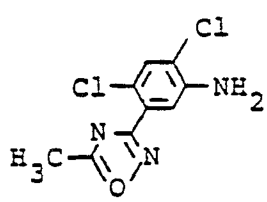

werden analog zu der in Beispiel 1 beschriebenen Arbeitsweise mit 33 Teilen einer 44 %igen Nitrosylschwefelsäure diazotiert und nach Ausrühren auf Eis und Wasser mit einer Lösung von 23,6 Teilen 1-(n)-Hexyl-2-hydroxy-3-cyan-4-methyl-pyridon-6 in 250 Teilen Wasser und 18 Teilen 50 %iger Natronlauge sowie 1 Teil eines Dispergiermittels (auf Ethylenoxid-Polymerisat-Basis) versetzt.

Die fertige Kupplung wird wie üblich aufgearbeitet. Man erhält 48,0 Teile des Farbstoffes der Formel

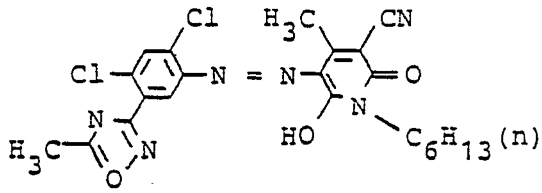

als gelbes Pulver, das sich in Dimethylformamid mit gelber Farbe löst und Polyestergewebe mit hohen Echtheiten färbt.

Beispiel 8

26,5 Teile der Diazokomponente der Formel

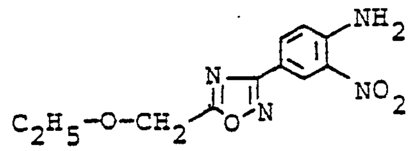

werden analog der in Beispiel 1 beschriebenen Arbeitsweise mit 34 Teilen Nitrosylschwefelsäure diazotiert.

Die auf Eis ausgerührte Diazoniumsalzlösung versetzt man mit 1 Teil eines sauer wirksamen Dispergiermittels. Man zerstört überschüssige salpetrige Säure und läßt dann unter sehr gutem Rühren eine Lösung von 26,4 Teilen der Kupplungskomponente 1-(2-Ethylhexyl)-2-hydroxy-3-cyan-4-methyl-pyridon-6 in 150 Raumteilen Dimethylformamid, 0,5 Teilen eines Dispergiermittels, 15 Teilen 50 %iger Natronlauge und 30 Teilen Wasser zufließen. Man rührt 1 bis 2 Stunden nach und hebt den pH-Wert der Kupplung dann durch Zugabe von Natronlauge auf 6 bis 7,5 an.

Nach dem üblichen Absaugen, Waschen mit Wasser und Trocknen werden 53 Teile des Farbstoffes der Formel

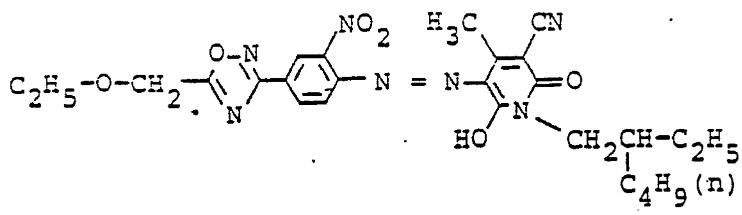

als gelbes Pulver erhalten, das sich in Dimethylformamid mit gelber Farbe löst und Polyestergewebe in kräftigen Tönen mit hoher Lichtechtheit färbt.

Beispiel 9

Man bedruckt ein Baumwollgewebe im Rouleauxdruck mit einer Druckpaste, die aus 15 Teilen des Farbstoffes der Formel

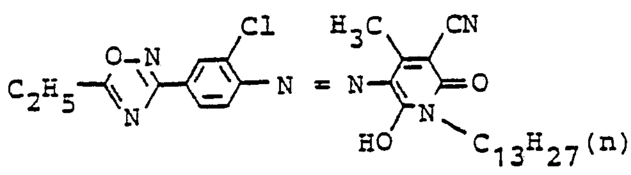

$\lambda_{max.}$ 442 nm

110 Teilen Polyethylenoxid vom Molekulargewicht 350,30 Teilen Ölsäurediethanolamid und 845 Teilen einer 10 %igen Alginatverdickung besteht. Man trocknet den Druck bei 100 °C und fixiert ihn danach durch eine Behandlung mit Heißluft in 1 Minute bei 195 °C. Man stellt fertig und erhält einen echten, gelben Druck auf weißem Grund.

Beispiel 10

Man bedruckt ein Mischgewebe aus Polyester/Cellulose (Gewichtsverhältnis 67 : 35) im Filmmaschinendruck mit einer Farbe, die aus 30 Teilen des Farbstoffes der Formel

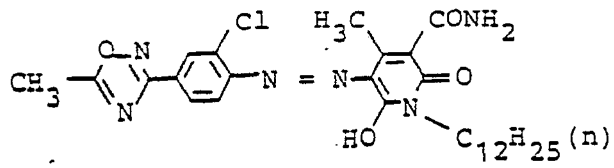

$\lambda_{max.}$ 427

100 Teilen des Umsetzungsproduktes aus Polyethylenoxid vom Molekulargewicht 300 mit Borsäure im Molverhältnis 3 : 1, 30 Teilen Ölsäurediethanolamid und 840 Teilen einer 3 %igen Alginatverdickung besteht, und trocknet den Druck bei 110 °C. Darauf behandelt man 5 Minuten bei 185 °C mit Heißdampf und stellt fertig.

Man erhält einen echten, gelben Druck auf weißem Grund.

Beispiel 11

Ein Baumwollgewebe wird im Foulard mit einer Lösung geklotzt, die 20 Teile des Farbstoffes der Formel

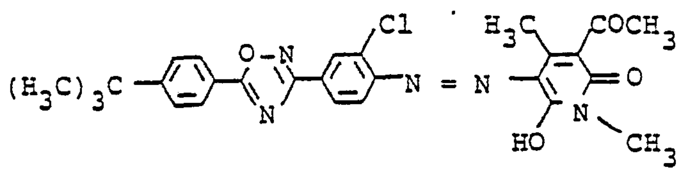

$\lambda_{max.}$ 429 nm

300 Teile einer 3 %igen Alginatverdickung, 550 Teile Wasser und 130 Teile Polyethylenoxid vom Molekulargewicht 300 enthält. Die Flottenaufnahme des Gewebes soll 80 % betragen. Man trocknet das Gewebe bei 100 °C. Zur Fixierung des Farbstoffes behandelt man es 5 Minuten mit Heißdampf von 190 °C. Danach spült man kalt, wäscht bei 90° in einem Bad, welches 3 Teile des Kondensationsproduktes eines langkettigen Alkohols mit Ethylenoxid auf 997 Teile Wasser enthält.

Man erhält eine gelbe Färbung.

Anstatt eines Baumwollgewebes kann auch ein Polyester/Baumwoll-Mischgewebe (Gewichtsverhältnis 67 : 33) mit der beschriebenen Lösung geklotzt werden. Man erhält eine gelbe Färbung, in der beide Phasen tongleich sind. An die Stelle der Behandlung mit Heißdampf kann auch eine Fixierung mit Heißluft in 2 Minuten bei 195 °C treten.

**Patentansprüche**

1. Pyridonfarbstoffe der allgemeinen Formel

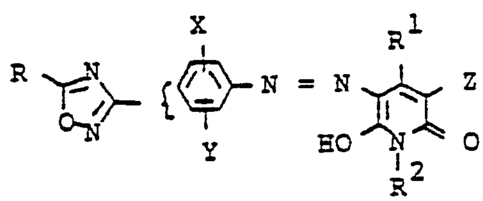

(I)

in der

R Wasserstoff oder ein aliphatischer, Alkenyl-, cycloaliphatischer, araliphatischer, aromatischer oder heteroaromatischer Rest,

$R^1$ Wasserstoff, Amino, Hydroxy oder $C_1$- bis $C_3$-Alkyl,

$R^2$ Wasserstoff, gegebenenfalls substituiertes Alkyl, Allyl, Aralkyl oder Aryl oder Alkyl- oder Arylamino,

X Wasserstoff, Chlor, Brom, Nitro, Methyl, Phenoxy, Tolyloxy, Dimethylphenyloxy, Chlorphenoxy oder $C_1$- bis $C_8$-Alkoxy,

Y Wasserstoff, Chlor oder Brom und

Z Wasserstoff, Acetyl, Carbamoyl oder Cyan sind.

2. Verbindungen gemäß Anspruch 1, wobei R gegebenenfalls durch Sauerstoff unterbrochenes und gegebenenfalls durch Phenoxy, Chlorphenoxy, Methylphenoxy, Methoxyphenoxy, Phenyl, Methylphenyl, Carboxyl oder $C_1$- bis $C_{12}$-Alkoxycarbonyl substituiertes $C_1$- bis $C_{17}$-Alkyl, $C_1$- bis $C_8$-Alkoxycarbonylvinyl, Hydroxycarbonylvinyl, Styryl, Cyclohexyl, Methylcyclohexyl, gegebenenfalls durch Chlor, Brom, Methyl, Ethyl oder $C_1$- bis $C_4$-Alkoxy substituiertes Phenyl, Pyridyl oder Thienyl ist.

3. Verbindungen gemäß Anspruch 1, wobei R $C_3$- bis $C_{17}$-Alkyl, durch $C_4$- bis $C_8$-Alkoxy, Phenoxy

oder Benzyloxy substituiertes $C_1$- oder $C_2$-Alkyl oder durch gegebenenfalls durch Sauerstoff unterbrochenes $C_1$- bis $C_8$-Alkoxycarbonyl substituiertes $C_1$- bis $C_4$-Alkyl ist.

4. Verbindungen gemäß Anspruch 1, wobei $R^1$ Methyl ist.

5. Verbindungen gemäß Anspruch 1, wobei $R^2$ Wasserstoff, $C_1$- bis $C_6$-Alkyl oder Allyl ist.

6. Verbindungen gemäß Anspruch 1, wobei X Wasserstoff, Chlor oder Brom ist.

7. Verbindungen gemäß Anspruch 1, wobei X Wasserstoff ist.

8. Verbindungen gemäß Anspruch 1, wobei X Nitro ist, wenn Z Wasserstoff oder Acetyl bedeutet.

9. Verbindungen gemäß Anspruch 1, wobei Y Wasserstoff, Chlor oder Brom ist.

10. Verbindungen gemäß Anspruch 1, wobei Y Wasserstoff ist.

11. Verbindungen gemäß Anspruch 1, wobei Z Cyan ist.

12. Verbindungen gemäß Anspruch 1 der Formel

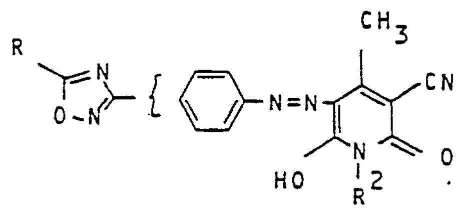

in der

R $C_3$- bis $C_{17}$-Alkyl, durch $C_4$- bis $C_8$-Alkoxy, Phenoxy oder Benzyloxy substituiertes $C_1$- oder $C_2$-Alkyl oder durch gegebenenfalls durch Sauerstoff unterbrochenes $C_1$- bis $C_8$-Alkoxycarbonyl substituiertes $C_1$- bis $C_4$-Alkyl ist und

$R^2$ Wasserstoff, $C_1$- bis $C_6$-Alkyl oder Allyl sind, wobei $R^2$ von Wasserstoff verschieden ist, wenn R einen Phenylring enthält.

13. Verbindungen gemäß Anspruch 12 bei dem der Oxdiazolylrest in m-Stellung steht.

14. Verwendung der Verbindungen gemäß Anspruch 1 zum Färben und/oder Bedrucken von Textilmaterial.

**Claims**

1. A pyridone dye of the general formula

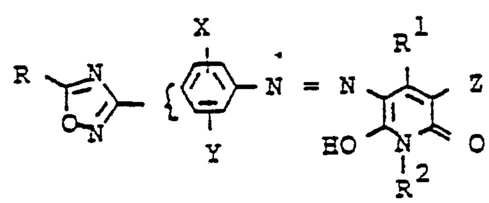

(I)

where

R is hydrogen or an aliphatic, alkenyl, cycloaliphatic, araliphàtic, aromatic or heteroaromatic radical,

$R^1$ is hydrogen, amino, hydroxyl or $C_1$-$C_3$-alkyl,

$R^2$ is hydrogen, unsubstituted or substituted alkyl, allyl, aralkyl or aryl or alkylamino or arylamino,

X is hydrogen, chlorine, bromine, nitro, methyl, phenoxy, tolyloxy, dimethylphenoxy, chlorophenoxy or $C_1$-$C_8$-alkoxy,

Y is hydrogen, chlorine or bromine, and

Z is hydrogen, acetyl, carbamyl or cyano.

2. A compound as claimed in claim 1, wherein R is $C_1$-$C_{17}$-alkyl which may or may not be interrupted by oxygen and is unsubstituted or substituted by phenoxy, chlorophenoxy, methylphenoxy, methoxyphenoxy, phenyl, methylphenyl, carboxyl or $C_1$-$C_{12}$-alkoxycarbonyl, or is $C_1$-$C_8$-alkoxycarbonylvinyl, hydroxycarbonylvinyl, styryl, cyclohexyl or methylcyclohexyl, or is pyridyl, thienyl or phenyl which is unsubstituted or substituted by chlorine, bromine, methyl, ethyl or $C_1$-$C_4$-alkoxy.

3. A compound as claimed in claim 1, wherein R is $C_3$-$C_{17}$-alkyl, $C_1$- or $C_2$-alkyl which is substituted by $C_4$-$C_8$-alkoxy, phenoxy or benzyloxy, or $C_1$-$C_4$-alkyl which is substituted by $C_1$-$C_8$-alkoxycarbonyl which may or may not be interrupted by oxygen.

4. A compound as claimed in claim 1, wherein R is methyl.

5. A compound as claimed in claim 1, wherein $R^2$ is hydrogen, $C_1$-$C_6$-alkyl or allyl.

6. A compound as claimed in claim 1, wherein X is hydrogen, chlorine or bromine.

7. A compound as claimed in claim 1, wherein X is hydrogen.

8. A compound as claimed in claim 1, wherein X is nitro if Z is hydrogen or acetyl.

9. A compound as claimed in claim 1, wherein Y is hydrogen, chlorine or bromine.

10. A compound as claimed in claim 1, wherein Y is hydrogen.

11. A compound as claimed in claim 1, wherein Z is cyano.

12. A compound as claimed in claim 1, of the formula

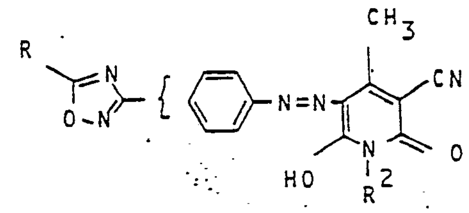

where

R is $C_3$-$C_{17}$-alkyl, $C_1$- or $C_2$-alkyl which is substituted by $C_4$-$C_8$-alkoxy, phenoxy or benzyloxy, or $C_1$-$C_4$-alkyl which is substituted by $C_1$-$C_8$-alkoxycarbonyl which may or may not be interrupted by oxygen, and

$R^2$ is hydrogen, $C_1$-$C_6$-alkyl or allyl, and $R^2$ is not hydrogen if R contains a phenyl ring.

13. A compound as claimed in claim 12, wherein the oxadiazolyl radical is in the m-position.

14. The use of a compound as claimed in claim 1 for dyeing and/or printing textile material.

**Revendications**

1. Colorants pyridoniques de formule générale

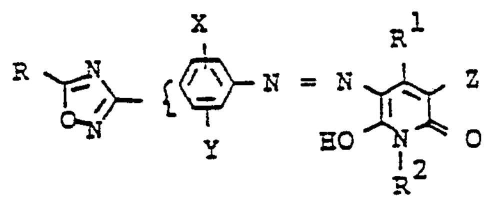

dans laquelle

R est un atome d'hydrogène ou un radical aliphatique, alcényle, cycloaliphatique, araliphatique, aromatique ou hétéroatomique,

$R^1$ est un atome d'hydrogène, un groupement amino, hydroxy ou alkyle en $C_1$ à $C_3$,

$R^2$ est un atome d'hydrogène, un radical alkyle, allyle, aralkyle ou aryle éventuellement substitué ou un groupement alkyl- ou arylamino,

X est un atome d'hydrogène, de chlore, de brome ou un groupement nitro, méthyle, phénoxy, tolyloxy, diméthylphényloxy, chlorophénoxy ou alcoxy en $C_1$ à $C_8$,

Y est un atome d'hydrogène, de chlore ou de brome et

Z est un atome d'hydrogène ou un groupement acétyle, carbamoyle ou cyano.

2. Composés selon la revendication 1, dans lesquels R est un radical alkyle en $C_1$ à $C_{17}$ éventuellement interrompu par un atome d'oxygène et éventuellement substitué par un groupement phénoxy, chlorophénoxy, méthylphénoxy, méthoxyphénoxy, phényle, méthylphényle, carboxyle ou $C_1$- à $C_{12}$-alcoxycarbonyle, un groupement $C_1$- à $C_8$-alcoxycarbonylvinyle, hydroxycarbonylvinyle, styryle, cyclohexyle, méthylcyclohexyle, phényle éventuellement substitué par un atome de chlore, de brome, un groupement méthyle, éthyle ou alcoxy en $C_1$ à $C_4$, pyridyle ou thiényle.

3. Composés selon la revendication 1, dans lesquels R est un radical alkyle en $C_3$ à $C_{17}$, alkyle en $C_1$ ou $C_2$ substitué par un groupement alcoxy en $C_4$ à $C_8$, phénoxy ou benzyloxy, ou alkyle en $C_1$ à $C_4$ substitué par un groupement $C_1$- à $C_8$-alcoxycarbonyle éventuellement interrompu par un atome d'oxygène.

4. Composés selon la revendication 1, dans lesquels $R^1$ est un radical méthyle.

5. Composés selon la revendication 1, dans lesquels $R^2$ est un atome d'hydrogène, un radical alkyle en $C_1$ à $C_6$ ou allyle.

6. Composés selon la revendication 1, dans lesquels X est un atome d'hydrogène, de chlore ou de brome.

7. Composés selon la revendication 1, dans lesquels X est un atome d'hydrogène.

8. Composés selon la revendication 1, dans lesquels X est un groupement nitro lorsque Z représente un atome d'hydrogène ou un groupement acétyle.

9. Composés selon la revendication 1, dans lesquels Y est un atome d'hydrogène, de chlore ou de brome.

10. Composés selon la revendication 1, dans lesquels Y est un atome d'hydrogène.

11. Composés selon la revendication 1, dans lesquels Z est un groupement cyano.

12. Composés selon la revendication 1 de formule

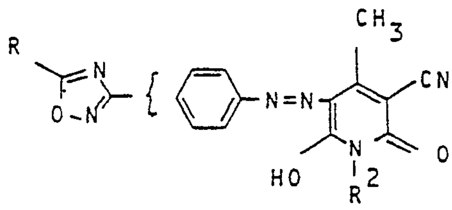

dans laquelle :

R est un radical alkyle en $C_3$ à $C_{17}$, alkyle en $C_1$ ou $C_2$ substitué par un groupement alcoxy en $C_4$ à $C_8$, phénoxy ou benzyloxy, ou alkyle en $C_1$ à $C_4$ substitué par un groupement $C_1$- à $C_8$-alcoxycarbonyle éventuellement interrompu par un atome d'oxygène et

$R^2$ est un atome d'hydrogène, un radical alkyle en $C_1$ à $C_6$ ou allyle, $R^2$ étant autre qu'un atome d'hydrogène lorsque R contient un noyau phényle.

13. Composés selon la revendication 12, dans lesquels le radical oxodiazolyle est situé en position m.

14. Utilisation des composés selon la revendication 1 pour la teinture et/ou l'impression de matières textiles.